(19) **Europäisches Patentamt European Patent Office Office européen des brevets**

(11) **EP 4 753 325 A1**

(12) **EUROPEAN PATENT APPLICATION**
published in accordance with Art. 153(4) EPC

(43) Date of publication:
03.06.2026 Bulletin 2026/23

(21) Application number: 23951785.7

(22) Date of filing: 13.09.2023

(51) International Patent Classification (IPC):
*H04W 28/06* (2009.01)    *H04B 7/0417* (2017.01)

(52) Cooperative Patent Classification (CPC):
H04B 7/0417; H04W 28/06

(86) International application number:
PCT/CN2023/118475

(87) International publication number:
WO 2025/054844 (20.03.2025 Gazette 2025/12)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: HUAWEI TECHNOLOGIES CO., LTD.
Shenzhen 518129 (CN)

(72) Inventors:
• LIU, Yong
  Shenzhen, Guangdong 518129 (CN)

• HU, Zhengyang
  Xianning West Road Xi'an, Shaanxi 710049 (CN)
• LIU, Guanzhang
  Xianning West Road Xi'an, Shaanxi 710049 (CN)
• ZOU, Yafei
  Xianning West Road Xi'an, Shaanxi 710049 (CN)
• DAI, Gang
  Shenzhen, Guangdong 518129 (CN)
• BI, Xiaoyan
  Shenzhen, Guangdong 518129 (CN)

(74) Representative: Pfenning, Meinig & Partner mbB
Patent- und Rechtsanwälte
Theresienhöhe 11a
80339 München (DE)

(54) **METHOD FOR FEEDING BACK CHANNEL STATE INFORMATION AND COMMUNICATION APPARATUS**

(57) A channel state information feedback method and a communication apparatus are provided, so that a contrastive learning network of a decoding network model can be updated based on a high-compression-ratio codeword and uplink channel information, and then downlink channel information in a current scenario is estimated based on a low-compression-ratio codeword, the uplink channel information, and the decoding network model, to reduce CSI feedback overheads. The method includes: after receiving a first codeword and a first uplink measurement pilot, updating a contrastive learning network based on the first codeword and first uplink channel information corresponding to the first uplink measurement pilot, after receiving a second codeword and a second uplink measurement pilot, inputting the second codeword and second uplink channel information corresponding to the second uplink measurement pilot into the contrastive learning network, determining CSI common information by using the contrastive learning network, adjusting a channel reconstruction network based on the CSI common information and the second codeword, and determining target downlink channel information based on the CSI common information and a parameter-adjusted channel reconstruction network.

| Access network device | | Terminal |

201: First downlink measurement pilot →

202: Determine first downlink channel information based on the first downlink measurement pilot

203: Input the first downlink channel information into a first compression network model, and output a first codeword by using the first compression network model

← 204: First codeword

← 205: First uplink measurement pilot

206: Determine first uplink channel information based on the first uplink measurement pilot

207: Update a parameter value of a contrastive learning network based on the first codeword and the first uplink channel information

208: Second downlink measurement pilot →

209: Determine second downlink channel information based on the second downlink measurement pilot

TO
FIG. 2B

TO
FIG. 2B

FIG. 2A

CONT.
FROM
FIG. 2A

CONT.
FROM
FIG. 2A

210: Input the second downlink channel information into a second compression network model, and output a second codeword by using the second compression network model

211: Second codeword

212: Second uplink measurement pilot

213: Determine second uplink channel information based on the second uplink measurement pilot

214: Input the second codeword and the second uplink channel information into the contrastive learning network, and output CSI common information by using the contrastive learning network

215: Input the CSI common information and the second codeword into a hyper network, and output a network parameter adjustment value by using the hyper network

216: Adjust a parameter value of a channel reconstruction network based on the network parameter adjustment value

217: Input the CSI common information into a parameter-adjusted channel reconstruction network, and output target downlink channel information by using the parameter-adjusted channel reconstruction network

FIG. 2B

**Description**

## TECHNICAL FIELD

Embodiments of this application relate to the field of wireless communication, and in particular, to a channel state information feedback method and a communication apparatus.

## BACKGROUND

As a quantity of antennas increases, dimensions of channel state information (channel state information, CSI) increase significantly. In this way, more overheads are required for CSI feedback.

Currently, a CSI feedback method is roughly as follows: After receiving a downlink measurement pilot sent by a base station, a terminal determines a downlink channel vector based on the downlink measurement pilot, and encodes the downlink channel vector into a codeword by using an encoding network model at a specific compression ratio, where the codeword is compressed data of the downlink channel vector, and the compression ratio is a ratio of a codeword length to a downlink channel vector length; and sends the codeword to the base station on a feedback link, and the base station decodes the codeword based on a decoding network model, where a decoding result is an estimated downlink channel vector.

In the foregoing method, CSI distortion is mitigated by feeding back a high-compression-ratio codeword, but resource overheads of the high-compression-ratio codeword are high.

## SUMMARY

This application provides a CSI feedback method. In the method, a contrastive learning network can be determined based on a high-compression-ratio codeword and uplink channel information, and then target downlink channel information can be obtained based on a low-compression-ratio codeword, the uplink channel information, and the contrastive learning network, to reduce CSI feedback overheads. This application further provides a communication apparatus that can implement the CSI feedback method.

According to a first aspect, a CSI feedback method is provided. The method includes: after sending a first downlink measurement pilot to a terminal, receiving a first codeword sent by the terminal based on the first downlink measurement pilot and a first uplink measurement pilot sent by the terminal, determining first uplink channel information based on the first uplink measurement pilot, updating a parameter value of a contrastive learning network based on the first codeword and the first uplink channel information, sending a second downlink measurement pilot to the terminal, receiving a second codeword sent by the terminal based on the second downlink measurement pilot and a second uplink measurement pilot sent by the terminal, after determining second uplink channel information based on the second uplink measurement pilot, inputting the second codeword and the second uplink channel information into an updated contrastive learning network, outputting CSI common information by using the contrastive learning network, inputting the CSI common information and the second codeword into a hyper network, outputting a network parameter adjustment value by using the hyper network, adjusting a parameter value of a channel reconstruction network based on the network parameter adjustment value, inputting the CSI common information into a parameter-adjusted channel reconstruction network, and outputting target downlink channel information by using the parameter-adjusted channel reconstruction network. A compression ratio of the second codeword is less than a compression ratio of the first codeword, and the hyper network includes but is not limited to a multilayer perceptron. The CSI common information includes one or more of an angle, a delay, a Doppler component, and a power.

The first downlink measurement pilot and the first uplink measurement pilot are measurement pilots in a first time period, and the second downlink measurement pilot and the second uplink measurement pilot are measurement pilots in a second time period. According to the method in this application, the contrastive learning network in the first time period can be determined based on a high-compression-ratio codeword (that is, the first codeword) and the first uplink channel information, and then the target downlink channel information in the second time period can be obtained based on a low-compression-ratio codeword (that is, the second codeword), the second uplink channel information, and the contrastive learning network, to reduce CSI feedback overheads in the second time period. In addition, the hyper network can determine the network parameter adjustment value in a current scenario based on the CSI common information and the low-compression-ratio codeword, and can adjust the channel reconstruction network in a decoding network model based on the network parameter adjustment value in the current scenario, so that the decoding network model can reconstruct downlink channel information in different scenarios.

In a possible implementation, the first uplink channel information, the second uplink channel information, the first downlink channel information, the second downlink channel information, and the target downlink channel information are represented by channel vectors. Optionally, the channel vector is obtained by performing singular value decomposition on a channel matrix. Alternatively, optionally, the channel vector is obtained by transforming a channel matrix.

In another possible implementation, the first uplink channel information, the second uplink channel information, the first downlink channel information, the second downlink channel information, and the target downlink channel information are represented by channel matrices.

In another possible implementation, the first downlink measurement pilot is sent to the terminal in a first measurement pilot periodicity, and the second downlink measurement pilot is sent to the terminal in a second measurement pilot periodicity. When the second measurement pilot periodicity is greater than the first measurement pilot periodicity, duration for feeding back the first codeword is shorter than duration for feeding back the second codeword, and the second codeword is the low-compression-ratio codeword. Therefore, feeding back the low-compression-ratio codeword for a long time can significantly reduce CSI feedback overheads.

In another possible implementation, the first downlink measurement pilot and the second downlink measurement pilot meet at least one of the following conditions: a measurement pilot bandwidth of the first downlink measurement pilot is greater than a measurement pilot bandwidth of the second downlink measurement pilot, a measurement pilot density of the first downlink measurement pilot is greater than a measurement pilot density of the second downlink measurement pilot, and a quantity of measurement pilot ports of the first downlink measurement pilot is greater than a quantity of measurement pilot ports of the second downlink measurement pilot. In this way, a large quantity of first downlink measurement pilots can be sent, to improve accuracy of estimating a downlink channel status by the terminal.

In another possible implementation, the CSI feedback method in this application further includes: sending a first compression ratio identifier to the terminal; and sending a second compression ratio identifier to the terminal. The first compression ratio identifier corresponds to the compression ratio of the first codeword, and the second compression ratio identifier corresponds to the compression ratio of the second codeword. Therefore, the terminal may be explicitly indicated to send the high-compression-ratio codeword and the low-compression-ratio codeword.

In another possible implementation, the contrastive learning network includes a first feature extraction network, a second feature extraction network, and a common information network. The first feature extraction network is used to extract a codeword feature, the second feature extraction network is used to extract an uplink channel feature, and the first feature extraction network is the same as the second feature extraction network. The common information network is used to determine the CSI common information based on the codeword feature and the uplink channel feature, and the common information network is a deep neural network, a convolutional neural network, or a recursive neural network.

In another possible implementation, the network parameter adjustment value includes at least one of network structure data, a neuron weight, a bias, an activation function, and the like. The network structure data includes one or more of a network layer identifier, a quantity of neurons of a network, and a neuron identifier of the network.

In another possible implementation, the CSI feedback method in this application further includes: precoding data based on the target downlink channel information; sending precoded data to the terminal; measuring a communication quality indicator based on the precoded data; and when the communication quality indicator is greater than a preset threshold, triggering the step of sending the first downlink measurement pilot to the terminal. The target downlink channel information may indicate downlink CSI in the current scenario, and data may be transmitted based on the downlink CSI. Communication quality of the data may be measured by using the communication quality indicator, and the communication quality indicator includes a signal-to-noise ratio and/or a block error rate. When communication quality is poor, CSI may be fed back again to obtain new downlink channel information.

According to a second aspect, a CSI feedback method is provided. The method includes: after receiving a first downlink measurement pilot sent by an access network device, determining first downlink channel information based on the first downlink measurement pilot, inputting the first downlink channel information into a first compression network model, outputting a first codeword by using the first compression network model, sending the first codeword to the access network device, sending a first uplink measurement pilot to the access network device, after receiving a second downlink measurement pilot sent by the access network device, determining second downlink channel information based on the second downlink measurement pilot, inputting the second downlink channel information into a second compression network model, outputting a second codeword by using the second compression network model, sending the second codeword to the access network device, and sending a second uplink measurement pilot to the access network device. The first codeword is a codeword in a first time period, the second codeword is a codeword in a second time period, and a compression ratio of the second codeword is less than a compression ratio of the first codeword. To be specific, it indicates that a high-compression-ratio codeword and an uplink measurement pilot are sent in the first time period, and a low-compression-ratio codeword and an uplink measurement pilot are sent in the second time period. The access network device can determine target downlink channel information based on the low-compression-ratio codeword and the uplink measurement pilot, to reduce CSI feedback overheads in the second time period.

In a possible implementation, the first downlink measurement pilot sent by the access network device in a first measurement pilot periodicity is received, and the second downlink measurement pilot sent by the access network device in a second measurement pilot periodicity is received. Because the second measurement pilot periodicity is greater than the first measurement pilot periodicity, a terminal feeds back the low-compression-ratio codeword in the second measurement pilot periodicity, to significantly reduce feedback overheads.

In another possible implementation, after a first compression ratio identifier sent by the access network device is received, the first downlink channel information is input into the first compression network model based on the first compression ratio identifier; and after a second compression ratio identifier sent by the access network device is received, the second downlink channel information is input into the second compression network model based on the second compression ratio identifier. In this way, codewords with different compression ratios can be fed back based on compression ratio identifiers.

According to a third aspect, a channel state information CSI feedback method is provided. The method includes: after sending a first downlink measurement pilot to a terminal, receiving a first codeword sent by the terminal based on the first downlink measurement pilot; after receiving a first uplink measurement pilot sent by the terminal, determining first uplink channel information based on the first uplink measurement pilot; updating a parameter value of a contrastive learning network based on the first codeword and the first uplink channel information; after sending a second downlink measurement pilot to the terminal, receiving a second codeword sent by the terminal based on the second downlink measurement pilot; after receiving a second uplink measurement pilot sent by the terminal, determining second uplink channel information based on the second uplink measurement pilot; inputting the second codeword and the second uplink channel information into the contrastive learning network, and outputting CSI common information by using the contrastive learning network; sending the CSI common information to the terminal; receiving a network parameter adjustment value sent by the terminal; adjusting a parameter value of a channel reconstruction network based on the network parameter adjustment value; and inputting the CSI common information into a parameter-adjusted channel reconstruction network, and then outputting target downlink channel information by using the parameter-adjusted channel reconstruction network. A compression ratio corresponding to the second codeword is less than a compression ratio corresponding to the first codeword.

When a hyper network is deployed on the terminal, the network parameter adjustment value in a current scenario can be determined by the terminal. In this way, calculation overheads of a base station can be reduced. After the terminal sends the network parameter adjustment value in the current scenario to the access network device, the access network device can adjust, based on the network parameter adjustment value in the current scenario, the channel reconstruction network in a decoding network model, so that the decoding network model can reconstruct downlink channel information in different scenarios.

In a possible implementation of the third aspect, the first downlink measurement pilot is sent to the terminal in a first measurement pilot periodicity, and the second downlink measurement pilot is sent to the terminal in a second measurement pilot periodicity, where the second measurement pilot periodicity is greater than the first measurement pilot periodicity. Because the second measurement pilot periodicity is greater than the first measurement pilot periodicity, the terminal feeds back a low-compression-ratio codeword in the second measurement pilot periodicity, to significantly reduce feedback overheads.

In another possible implementation of the third aspect, the first downlink measurement pilot and the second downlink measurement pilot meet at least one of the following conditions: a measurement pilot bandwidth of the first downlink measurement pilot is greater than a measurement pilot bandwidth of the second downlink measurement pilot, a measurement pilot density of the first downlink measurement pilot is greater than a measurement pilot density of the second downlink measurement pilot, and a quantity of measurement pilot ports of the first downlink measurement pilot is greater than a quantity of measurement pilot ports of the second downlink measurement pilot. In this way, a large quantity of first downlink measurement pilots can be sent, to improve accuracy of estimating a downlink channel status by the terminal.

In another possible implementation of the third aspect, the CSI feedback method in this application further includes: after sending the first downlink measurement pilot to the terminal, sending a first compression ratio identifier to the terminal, and after sending the second downlink measurement pilot to the terminal, sending a second compression ratio identifier to the terminal. The first compression ratio identifier corresponds to the compression ratio of the first codeword, and the second compression ratio identifier corresponds to the compression ratio of the second codeword. In this way, the terminal can be explicitly indicated to feed back codewords with different levels of compression ratios.

In another possible implementation of the third aspect, the contrastive learning network includes a first feature extraction network, a second feature extraction network, and a common information network. The first feature extraction network is used to extract a codeword feature, the second feature extraction network is used to extract an uplink channel feature, and the first feature extraction network is the same as the second feature extraction network. The common information network is used to determine the CSI common information based on the codeword feature and the uplink channel feature.

In another possible implementation of the third aspect, the network parameter adjustment value includes at least one of network structure data, a neuron weight, a bias, an activation function, and the like.

In another possible implementation of the third aspect, the CSI feedback method in this application further includes: precoding data based on the target downlink channel information; sending precoded data to the terminal;

measuring a communication quality indicator based on the data; and when the communication quality indicator is greater than a preset threshold, triggering the step of sending the first downlink measurement pilot to the terminal. The communication quality indicator includes a signal-to-noise ratio and/or a block error rate.

In another possible implementation of the third aspect, the CSI feedback method in this application further includes: sending a network parameter value of the hyper network to the terminal.

According to a fourth aspect, a channel state information CSI feedback method is provided. The method includes: receiving a first downlink measurement pilot sent by an access network device; determining first downlink channel information based on the first downlink measurement pilot; inputting the first downlink channel information into a first compression network model, and outputting a first codeword by using the first compression network model; sending the first codeword to the access network device; sending a first uplink measurement pilot to the access network device; receiving a second downlink measurement pilot sent by the access network device; determining second downlink channel information based on the second downlink measurement pilot; inputting the second downlink channel information into a second compression network model, and outputting a second codeword by using the second compression network model, where a compression ratio of the second codeword is less than a compression ratio of the first codeword; sending the second codeword to the access network device; sending a second uplink measurement pilot to the access network device; receiving CSI common information sent by the access network device, where the CSI common information is determined by the access network device based on the second codeword and the second uplink measurement pilot; inputting the CSI common information into a hyper network, and outputting a network parameter adjustment value by using the hyper network; and sending the network parameter adjustment value to the access network device.

In a possible implementation, the first downlink measurement pilot sent by the access network device in a first measurement pilot periodicity is received, and the second downlink measurement pilot sent by the access network device in a second measurement pilot periodicity is received. The second measurement pilot periodicity is greater than the first measurement pilot periodicity. The second codeword sent by a terminal in the second measurement pilot periodicity is a low-compression-ratio codeword, and therefore, CSI feedback overheads can be reduced.

In another possible implementation, a first compression ratio identifier sent by the access network device is received, the first downlink channel information is input into the first compression network model based on the first compression ratio identifier, a second compression ratio identifier sent by the access network device is received, and the second downlink channel information is input into the second compression network model based on the second compression ratio identifier. In this way, codewords with different levels of compression ratios can be fed back based on compression ratio identifiers.

In another possible implementation, before the first downlink measurement pilot sent by the access network device is received, a network parameter value of the hyper network sent by the access network device is received; and the hyper network is configured based on the network parameter value of the hyper network. The network parameter value of the hyper network includes a hyperparameter of the hyper network.

According to a fifth aspect, a CSI feedback method is provided. The method includes: after sending a downlink measurement pilot to a terminal, receiving a codeword sent by the terminal based on the downlink measurement pilot, receiving a first uplink measurement pilot sent by the terminal, and then determining first uplink channel information based on the first uplink measurement pilot; after inputting the codeword and the first uplink channel information into a contrastive learning network, determining CSI common information by using the contrastive learning network; after receiving a second uplink measurement pilot sent by the terminal, determining second uplink channel information based on the second uplink measurement pilot, inputting the second uplink channel information into a hyper network, and outputting a network parameter adjustment value by using the hyper network; adjusting a parameter value of a channel reconstruction network based on the network parameter adjustment value; and inputting the CSI common information into a parameter-adjusted channel reconstruction network, and outputting target downlink channel information by using the parameter-adjusted channel reconstruction network.

According to this implementation, the CSI common information in a first time period can be determined based on a high-compression-ratio codeword and uplink channel information, and then downlink channel information in a second time period can be determined based on the uplink channel information and the CSI common information in the first time period, to reduce CSI feedback overheads in the second time period. In addition, the hyper network can determine the network parameter adjustment value in a current scenario based on the uplink channel information, and can adjust the channel reconstruction network in a decoding network model based on the network parameter adjustment value in the current scenario, so that the decoding network model can reconstruct downlink channel information in different scenarios.

In a possible implementation, the first uplink measurement pilot sent by the terminal in a first measurement pilot periodicity is received, and the second uplink measurement pilot sent by the terminal in a second measurement pilot periodicity is received. Because the first measurement pilot periodicity is less than the second measurement pilot periodicity, no codeword needs to be fed back in the second measurement pilot periodicity, so that CSI feedback overheads can be reduced.

In another possible implementation, data is precoded based on the target downlink channel information;

precoded data is sent to the terminal; a communication quality indicator is obtained based on the data; and when the communication quality indicator is greater than a preset threshold, it indicates that communication quality is poor, and the step of sending the downlink measurement pilot to the terminal is triggered, to update the target downlink channel information. The communication quality indicator includes a signal-to-noise ratio and/or a block error rate.

According to a sixth aspect, a CSI feedback method is provided. The method includes: after receiving a downlink measurement pilot sent by an access network device, determining downlink channel information based on the downlink measurement pilot; inputting the downlink channel information into a compression network model, and outputting a codeword by using the compression network model; sending the codeword to the access network device; and after sending a first uplink measurement pilot to the access network device, sending a second uplink measurement pilot to the access network device. According to this implementation, a terminal feeds back a high-compression-ratio codeword in a first time period, and does not feed back a codeword in a second time period, to reduce CSI feedback overheads.

In a possible implementation, the first uplink measurement pilot is sent to the access network device in a first measurement pilot periodicity, and the first uplink measurement pilot is sent to the access network device in a second measurement pilot periodicity. The first measurement pilot periodicity is less than the second measurement pilot periodicity.

According to a seventh aspect, a communication apparatus is provided, including a module configured to perform the method according to any one of the first aspect or the implementations of the first aspect, including a module configured to perform the method according to any one of the third aspect or the implementations of the third aspect, or including a module configured to perform the method according to any one of the fifth aspect or the implementations of the fifth aspect.

According to an eighth aspect, a communication apparatus is provided, including a module configured to perform the method according to any one of the second aspect or the implementations of the second aspect, including a module configured to perform the method according to any one of the fourth aspect or the implementations of the fourth aspect, or including a module configured to perform the method according to any one of the sixth aspect or the implementations of the sixth aspect.

According to a ninth aspect, a communication apparatus is provided, including a processor and an interface circuit. The interface circuit is configured to receive a signal from another communication apparatus and transmit the signal to the processor, or send a signal from the processor to another communication apparatus, and the processor is configured to implement the method according to any one of the first aspect or the implementations of the first aspect, the method according to any one of the third aspect or the implementations of the third aspect, or the method according to any one of the fifth aspect or the implementations of the fifth aspect by using a logic circuit or by executing code instructions.

According to a tenth aspect, a communication apparatus is provided, including a processor and an interface circuit. The interface circuit is configured to receive a signal from another communication apparatus and transmit the signal to the processor, or send a signal from the processor to another communication apparatus, and the processor is configured to implement the method according to any one of the second aspect or the implementations of the second aspect, the method according to any one of the fourth aspect or the implementations of the fourth aspect, or the method according to any one of the sixth aspect or the implementations of the sixth aspect by using a logic circuit or by executing code instructions.

According to an eleventh aspect, a computer-readable storage medium is provided. The computer-readable storage medium stores a computer program or instructions. When the computer program or the instructions are executed by a communication apparatus, the method according to any one of the first aspect or the implementations of the first aspect, the method according to any one of the third aspect or the implementations of the third aspect, or the method according to any one of the fifth aspect or the implementations of the fifth aspect is implemented.

According to a twelfth aspect, a computer-readable storage medium is provided. The computer-readable storage medium stores a computer program or instructions. When the computer program or the instructions are executed by a communication apparatus, the method according to any one of the second aspect or the implementations of the second aspect, the method according to any one of the fourth aspect or the implementations of the fourth aspect, or the method according to any one of the sixth aspect or the implementations of the sixth aspect is implemented.

## BRIEF DESCRIPTION OF DRAWINGS

FIG. 1 is a diagram of an architecture of a mobile communication system to which embodiments of this application are applied;
FIG. 2A and FIG. 2B are a flowchart of a CSI limited-feedback method according to an embodiment of this application;
FIG. 3A and FIG. 3B are another flowchart of a CSI limited-feedback method according to an embodiment of this application;
FIG. 4A is a diagram of a CSI feedback method according to an embodiment of this application;

EP 4 753 325 A1

FIG. 4B is another diagram of a CSI feedback method according to an embodiment of this application;

FIG. 5A is a diagram of processing data by a decoding network model according to an embodiment of this application;

FIG. 5B is another diagram of processing data by a decoding network model according to an embodiment of this application;

FIG. 6 is a diagram of a Markov random field block according to an embodiment of this application;

FIG. 7 is a diagram of a quantity of codeword bits and an achievable rate ratio according to an embodiment of this application;

FIG. 8 is a flowchart of a CSI zero-feedback method according to an embodiment of this application;

FIG. 9A is a diagram of a CSI zero-feedback method according to an embodiment of this application;

FIG. 9B is another diagram of a CSI zero-feedback method according to an embodiment of this application;

FIG. 10A is another diagram of processing data by a decoding network model according to an embodiment of this application;

FIG. 10B is another diagram of processing data by a decoding network model according to an embodiment of this application;

FIG. 11 is a diagram of an uplink-downlink frequency domain spacing and an achievable rate ratio according to an embodiment of this application;

FIG. 12A and FIG. 12B are a flowchart of a CSI feedback method used when a hyper network is deployed on a terminal according to an embodiment of this application;

FIG. 13A and FIG. 13B are another flowchart of a CSI feedback method used when a hyper network is deployed on a terminal according to an embodiment of this application;

FIG. 14 is a diagram of a structure of a communication apparatus according to an embodiment of this application; and

FIG. 15 is another diagram of a structure of a communication apparatus according to an embodiment of this application.

## DESCRIPTION OF EMBODIMENTS

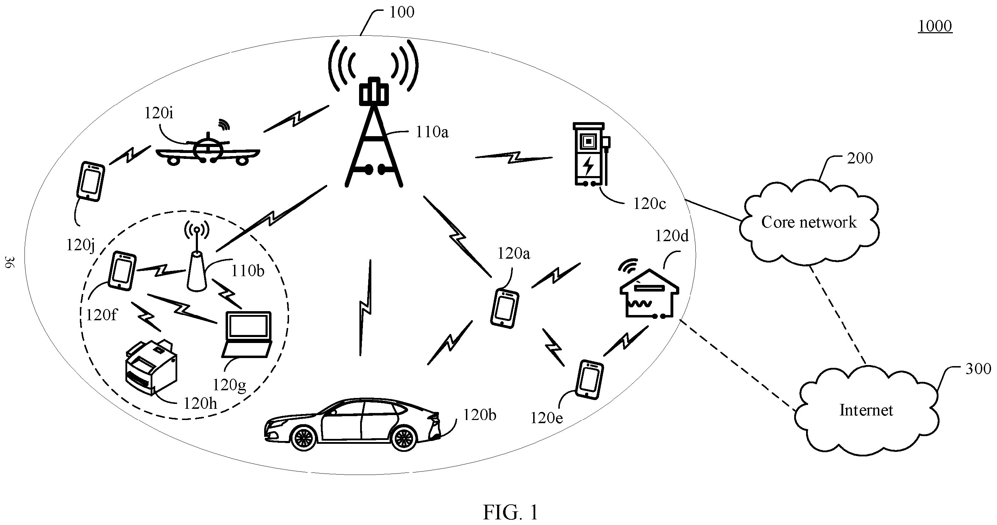

FIG. 1 is a diagram of an architecture of a communication system 1000 to which embodiments of this application are applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor station (for example, 110b in FIG. 1), or may be a relay node, a donor node, or the like. A specific technology and a specific device form that are used by the radio access network device are not limited in embodiments of this application. For ease of description, the following uses an example in which a base station is used as a radio access network device for description.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be at a fixed position, or may be mobile. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, relative to 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource for wireless communication is not limited in embodiments of this application.

In embodiments of this application, a function of the base station may alternatively be performed by a module (for example, a chip) in the base station, or may be performed by a control subsystem including a function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

The following describes a network model in this application.

A neural network is a mathematical model or a computational model that imitates a structure and a function of a biological neural network (a central nervous system of an animal, especially a brain). The neural network is formed by a large quantity of connected neurons for computation. A neural network may include a plurality of neural network layers with different functions, and each layer includes a parameter and a computation rule. Different layers in the neural network have different names based on different computation formulas or different functions. For example, a layer for convolution computation is referred to as a convolutional layer. The convolutional layer is commonly used to perform feature extraction on an input signal (for example, an image). A neural network may alternatively include a combination of a plurality of neural subnetworks. Neural networks of different structures are applicable to different scenarios (for example, classification and recognition), or provide different effects when applicable to a same scenario. That the structures of the neural networks are different specifically includes one or more of the following: quantities of network layers in the neural networks are different, sequences of the network layers are different, or weights, parameters, or computation formulas at the network layers are different. A plurality of different types of neural networks having high accuracy applied to application scenarios such as recognition or classification already exist in the industry. Some of the neural networks, after being trained by using a specific dataset, may be separately used to complete a task, or complete a task in combination with another neural network (or another functional module).

A deep learning model is a machine learning model with a complex structure of a neural network. Based on whether a label corresponding to training data needs to be depended on during training of the deep learning model, the deep learning model may also be classified into a supervised learning model and an unsupervised learning model. Details are not described herein. A classic deep learning model includes a convolutional neural network (convolutional neural network, CNN), a recurrent neural network (recurrent neural network, RNN), a recursive neural network (recursive neural network, RNN), and the like. In the RNN, an output of a neuron may directly act on the neuron at a next moment, that is, an input of an $i^{th}$-layer neuron at a moment m includes an output of (i-1) layers of neurons at the moment and an output of the $i^{th}$-layer neuron at a moment (m-1). For the CNN, not all upper-layer and lower-layer neurons can be directly connected, but a "convolution kernel" is used as an intermediary. In the network, after a convolution operation is performed on to-be-processed information, an original location relationship is still retained.

A contrastive learning network belongs to a self-supervised network or an unsupervised network. The contrastive learning network may perform similar encoding on a same type of data, and make encoding results of different types of data as different as possible.

A Multilayer perceptron (multilayer perceptron, MLP) is a forward-structured artificial neural network, and includes an input layer, an output layer, and a plurality of hidden layers. The plurality of hidden layers are connected in a full-connection manner.

Base stations may be deployed in cities, towns, deserts, seas, grasslands, mountainous areas, and other areas. Base stations may be deployed indoors or outdoors. In each scenario, a base station decodes a codeword into a target downlink channel matrix by using a decoding network model, adjusts a model parameter of the decoding network model based on a loss value between the target downlink channel matrix and an original downlink channel matrix, updates the decoding network model based on the model parameter of the decoding network model, and performs iteration on the foregoing steps performed by the base station until a loss value between a reconstructed downlink channel matrix and the original downlink channel matrix is less than a preset loss value.

When a terminal switches from one scenario to another scenario, a channel matrix between the base station and the terminal also changes accordingly. Because downlink channel matrices in different scenarios differ greatly, when a compression network model or a decoding network model does not meet a current scenario, downlink channel information generated by the decoding network model does not meet the current scenario either, and a high block error rate may occur during data transmission. In this case, the decoding network model needs to be re-trained.

For a problem that overheads of training a decoding network model by using a high-compression-ratio codeword are high, in this application, after the decoding network model is trained by using the high-compression-ratio codeword, the decoding network model may be updated by using a low-compression-ratio codeword or an uplink channel matrix, to reduce CSI feedback overheads. In this application, a method in which the terminal feeds back a low-compression-ratio codeword and an access network device updates the decoding network model based on the low-compression-ratio codeword is referred to as a CSI limited-feedback method. A method in which the terminal does not feed back a compression-ratio codeword and the access network device updates the decoding network model based on an uplink channel matrix is referred to as a CSI zero-feedback method.

In the CSI limited-feedback method, the terminal feeds back the high-compression-ratio codeword and the low-compression-ratio codeword, and the two codewords are generated by different compression network models. A trigger condition for feeding back a codeword may be a preset time period, or a compression ratio identifier sent by the access network device.

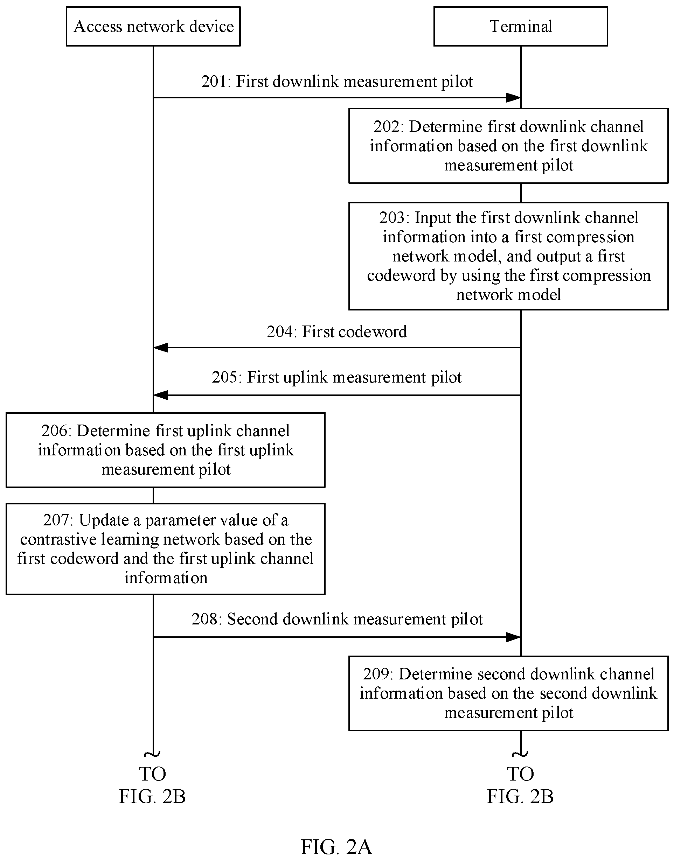

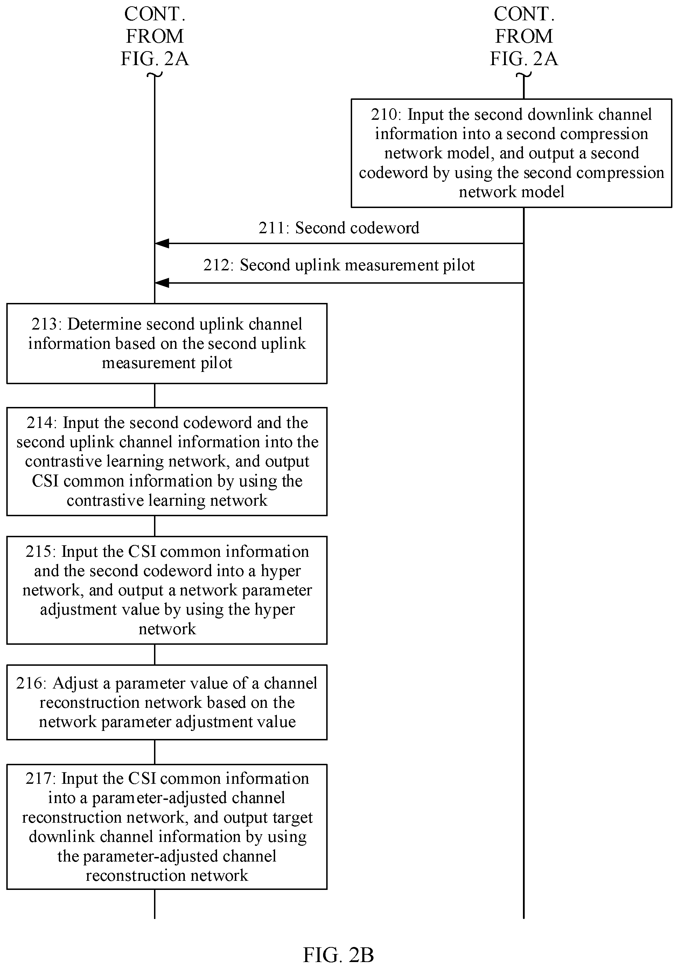

The following describes, by using a terminal and an access network device as an example of an execution body, a CSI feedback method in which a compression ratio identifier is not included. Refer to FIG. 2A and FIG. 2B. An embodiment of a CSI limited-feedback method in this application includes the following steps.

Step 201: An access network device sends a first downlink measurement pilot to a terminal.

Step 202: The terminal determines first downlink channel information based on the first downlink measurement pilot.

The first downlink channel information may be a downlink channel matrix in a first time period or a downlink channel vector in a first time period. A second downlink channel information may be a downlink channel matrix in a second time period or a downlink channel vector in a second time period. In this application, the downlink channel vector may be a vector obtained by sequentially arranging rows of the downlink channel matrix, a vector obtained by sequentially arranging columns of the downlink channel matrix, or a vector obtained by performing singular value decomposition on the downlink channel matrix. It should be understood that a manner of obtaining the downlink channel vector is not limited to the foregoing examples.

Step 203: The terminal inputs the first downlink channel information into a first compression network model, and outputs a first codeword by using the first compression network model.

Step 204: The terminal sends the first codeword to the access network device.

Step 205: The terminal sends a first uplink measurement pilot to the access network device.

Step 206: The access network device determines first uplink channel information based on the first uplink measurement pilot.

In this application, the first uplink channel information may be an uplink channel matrix in the first time period or an uplink channel vector in the first time period. Second uplink channel information may be an uplink channel matrix in the second time period or an uplink channel vector in the second time period. The uplink channel vector may be a vector obtained by sequentially arranging rows of the uplink channel matrix, a vector obtained by sequentially arranging columns of the uplink channel matrix, or a vector obtained by performing singular value decomposition on the uplink channel matrix. It should be understood that a manner of obtaining the uplink channel vector is not limited to the foregoing examples.

Step 207: The access network device updates a parameter value of a contrastive learning network based on the first codeword and the first uplink channel information.

A pre-trained decoding network model is deployed on the access network device, and the decoding network model includes the contrastive learning network, a channel reconstruction network, and a hyper network. Optionally, the contrastive learning network includes a first feature extraction network, a second feature extraction network, and a common information network. The first feature extraction network is used to extract a codeword feature, the second feature extraction network is used to extract an uplink channel feature, and the common information network is used to determine CSI common information based on the codeword feature and the uplink channel feature. Optionally, both the first feature extraction network and the second feature extraction network are neural networks.

The common information network may be a deep neural network, a recursive neural network, or a convolutional neural network, or the common information network is a single network layer. When the common information network is a convolutional neural network, the common information network includes a convolutional layer and an activation layer, or the common information network includes a convolutional layer, a pooling layer, and an activation layer. When the common information network is a single network layer, the network layer is used to implement function functionality.

Step 208: The access network device sends a second downlink measurement pilot to the terminal.

Step 209: The terminal determines the second downlink channel information based on the second downlink measurement pilot.

Step 210: The terminal inputs the second downlink channel information into a second compression network model, and outputs a second codeword by using the second compression network model.

A condition for triggering execution of step 203 or step 210 may be a preset periodicity. For example, step 201 to step 203 are performed in a first periodicity, and step 208 to step 210 are performed in a second periodicity. A value of the periodicity may be set based on an actual situation. This is not limited in this application.

A compression ratio of the second codeword is less than a compression ratio of the first codeword. For example, the compression ratio of the first codeword is 1/4 or 1/8, and the compression ratio of the second codeword is 1/16, 1/32, or 1/64. It should be understood that the compression ratio of the first codeword and the compression ratio of the second codeword may be set based on an actual situation. This is not limited in this application. The first compression network model is used to compress downlink channel information into a high-compression-ratio codeword, and the second compression network model is used to compress downlink channel information into a low-compression-ratio codeword.

Step 211: The access network device receives the second codeword sent by the terminal.

Step 212: The terminal sends a second uplink measurement pilot to the access network device.

Step 213: The access network device determines the second uplink channel information based on the second uplink measurement pilot.

Step 214: The access network device inputs the second uplink channel information into the contrastive learning network, and outputs the CSI common information by using the contrastive learning network. The CSI common information includes a same part and a similar part in the uplink channel information and the downlink channel information. When a difference between the uplink channel information and the downlink channel information is less than a threshold, it is determined that a common part of the uplink channel information and the downlink channel information is the CSI common information. When a difference between channel information of an uplink channel and channel information of a downlink channel is greater than or equal to a threshold, it is determined that a common part of the channel information of the uplink channel and the channel information of the downlink channel is not the CSI common information. Specifically, the CSI common information includes one or more of an angle, a delay, a Doppler component, and a power.

Step 215: The access network device inputs the CSI common information and the second codeword into the hyper network, and outputs a network parameter adjustment value by using the hyper network. The hyper network may include but is not limited to a multilayer perceptron (multilayer perceptron, MLP).

Step 216: The access network device adjusts a parameter value of the channel reconstruction network based on the network parameter adjustment value.

The network parameter adjustment value includes at least one of network structure data, a neuron weight, a bias, an activation function, and the like.

The network structure data includes one or more of a network layer identifier, a quantity of neurons, and a neuron identifier. When the network parameter adjustment value includes network structure data, a parameter value of one or more network layers in the channel reconstruction network may be adjusted. Optionally, a parameter value of a last network layer in the channel reconstruction network is adjusted.

In this application, a neuron weight, a bias, and an activation function of a network layer in the channel reconstruction network may be adjusted based on the network parameter adjustment value. A specific operation may include but is not limited to product, convolution, substitution, and exclusive OR. For example, the activation function of the network layer in the channel reconstruction network is substituted with the activation function of the network parameter adjustment value. Alternatively, the activation function of the network parameter adjustment value is multiplied by the activation function of the network layer in the channel reconstruction network. Other operations are similar and are not described herein.

Step 217: The access network device inputs the CSI common information into a parameter-adjusted channel reconstruction network, and outputs target downlink channel information by using the parameter-adjusted channel reconstruction network.

In this application, the first downlink measurement pilot and the first uplink measurement pilot belong to measurement pilots in the first time period, and the second downlink measurement pilot and the second uplink measurement pilot belong to measurement pilots in the second time period. A downlink measurement pilot may be but is not limited to a channel state information-reference signal (channel state information reference signal, CSI-RS). An uplink measurement pilot may be but is not limited to a sounding reference signal (sounding reference signal, SRS). Duration of the first time period is shorter than duration of the second time period. In this way, downlink channel CSI may be obtained by using a low-compression-ratio codeword for a long time.

It should be noted that the terminal may receive the first downlink measurement pilot and send the first uplink measurement pilot in a first measurement pilot periodicity, and receive the second downlink measurement pilot and send the second uplink measurement pilot in a second measurement pilot periodicity. The first measurement pilot periodicity is less than the second measurement pilot periodicity. Therefore, the terminal may send the low-compression-ratio codeword in the second measurement pilot periodicity, to significantly reduce feedback overheads.

The first downlink measurement pilot and the second downlink measurement pilot meet at least one of the following conditions: a measurement pilot bandwidth of the first downlink measurement pilot is greater than a measurement pilot bandwidth of the second downlink measurement pilot, a measurement pilot density of the first downlink measurement pilot is greater than a measurement pilot density of the second downlink measurement pilot, and a quantity of measurement pilot ports of the first downlink measurement pilot is greater than a quantity of measurement pilot ports of the second downlink measurement pilot. In this way, a large quantity of first downlink measurement pilots may be sent in the first measurement pilot periodicity, so that the terminal can improve accuracy of estimating downlink state information based on the large quantity of first downlink measurement pilots.

In this embodiment, the access network device may determine the contrastive learning network in the first time period based on the high-compression-ratio codeword and the uplink channel information, adjust the channel reconstruction network based on the low-compression-ratio codeword and the uplink channel information, and output the target downlink channel information by using the channel reconstruction network, where the target downlink channel information may be considered as the downlink channel CSI. The downlink channel CSI can be estimated by feeding back the low-compression-ratio codeword in the second time period, and therefore, CSI feedback overheads can be reduced.

Then, the hyper network can determine the network parameter adjustment value in a current scenario based on the CSI common information and the low-compression-ratio codeword, and can adjust the channel reconstruction network in the decoding network model based on the network parameter adjustment value in the current scenario, so that the decoding network model can accurately estimate downlink channel CSI in different scenarios.

In this application, a first compression network and a second compression network of the terminal belong to encoding networks, the first compression network and the decoding network model may form an end-to-end network, and a loss function of the end-to-end network includes an end-to-end loss and a contrastive loss. A transmitter and a receiver exchange training information, to complete end-to-end network training. For example, after obtaining a downlink channel matrix, the receiver sends the downlink channel matrix to the transmitter, where the downlink channel matrix is used as a training label, and a downlink channel matrix obtained by the transmitter through estimation is used as a training sample. The training sample may be offline data or online data. This is not limited in this application. The training sample may alternatively be a downlink channel vector.

The end-to-end loss includes a bit error indicator loss and a contrastive loss, and a bit error indicator may be but is not limited to an achievable rate. The contrastive loss is a loss between output data of a downlink channel codeword through the contrastive learning network and output data of uplink channel information through the contrastive learning network.

In an optional embodiment, the loss function of the end-to-end network is:

$$-\frac{1}{N_b}\sum_{l=1}^{N_b}(\frac{1}{\tilde{N}_c}\sum_{i=1}^{\tilde{N}_c}\log_2(1+\left\|\tilde{v}_{l,i}^H \hat{v}_{l,i}\right\|_2^2))+\left\|(O_c)_l-(O_{down})_l\right\|_2^2$$

In the loss function, $-\dfrac{1}{N_b}\sum_{l=1}^{N_b}(\dfrac{1}{\tilde{N}_c}\sum_{i=1}^{\tilde{N}_c}\log_2(1+\left\|\tilde{v}_{l,i}^H\hat{v}_{l,i}\right\|_2^2))$ is an achievable rate loss, and

$\left\|(O_c)_l-(O_{down})_l\right\|_2^2$ is a contrastive loss.

$N_b$ is a total quantity of training batches, $N_c$ is a total quantity of subcarriers, $O_c$ is a CSI common information part corresponding to uplink channel information, $O_{down}$ is a CSI common information part corresponding to a codeword, $\tilde{v}_{l,i}^H$ is a downlink channel vector of an ith subcarrier obtained by the terminal through estimation based on an lth batch of downlink measurement pilots, $\hat{v}_{l,i}$ is a downlink channel vector of an ith subcarrier in an lth batch of data output by the decoding network model, l is a training batch index, and i is a subcarrier index.

In an optional embodiment, after step 207, the CSI feedback method in this application further includes: The access network device outputs the CSI common information in the first time period by using the contrastive learning network, inputs the CSI common information in the first time period into the channel reconstruction network, and outputs the downlink channel information in the first time period by using the channel reconstruction network.

In this embodiment, the access network device may reconstruct the downlink channel CSI in the first time period based on the first codeword and the first uplink channel information, precode data based on the downlink channel information in the first time period, send precoded data to the terminal, measure a communication quality indicator based on the data, and when the communication quality indicator is greater than a preset threshold, re-perform step 201 to step 217.

In another optional embodiment, after step 217, the CSI feedback method in this application further includes: precoding data based on the target downlink channel information; sending precoded data to the terminal; measuring a communication quality indicator based on the data; and when the communication quality indicator is greater than a preset threshold, re-performing step 201 to step 217. When the communication quality indicator is less than or equal to the preset threshold, it indicates that communication quality of a current downlink channel can ensure data transmission, and data transmission may continue based on current downlink channel information. When the communication quality indicator is greater than the preset threshold, it indicates that communication quality is poor, that is, downlink channel information obtained through estimation does not meet a current scenario, and target downlink channel information needs to be re-estimated.

Communication quality of data may be measured based on the communication quality indicator, and the communication quality indicator includes a signal-to-noise ratio and/or a block error rate (block error rate, BER). The signal-to-noise ratio may be but is not limited to a signal to interference plus noise ratio (signal to interference plus noise ratio, SINR). It should be understood that a preset threshold corresponding to the signal-to-noise ratio and a preset threshold corresponding to the block error rate may be set to different values. This is not specifically limited. The communication quality indicator in this application is not limited to the foregoing examples.

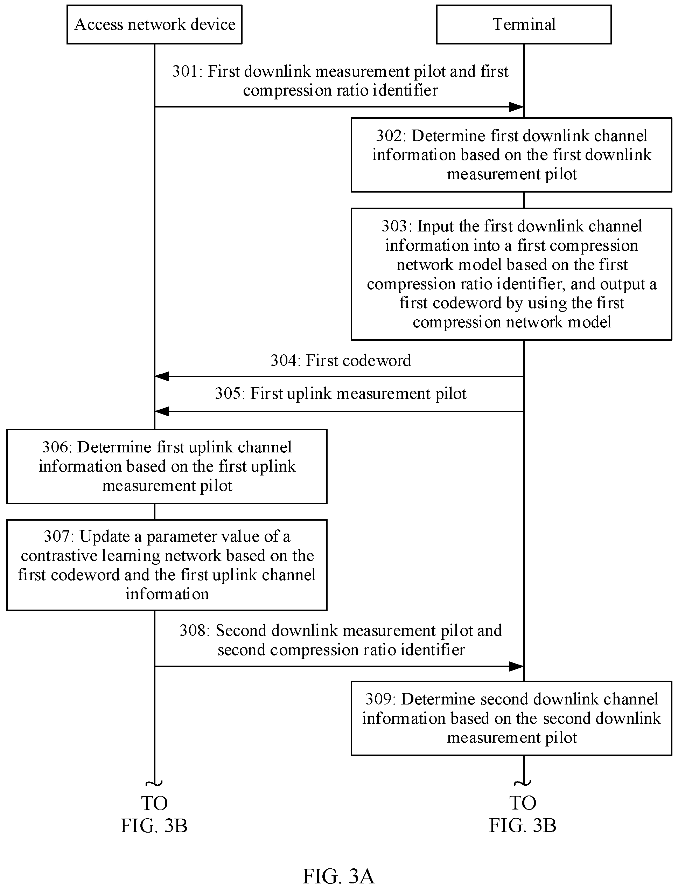

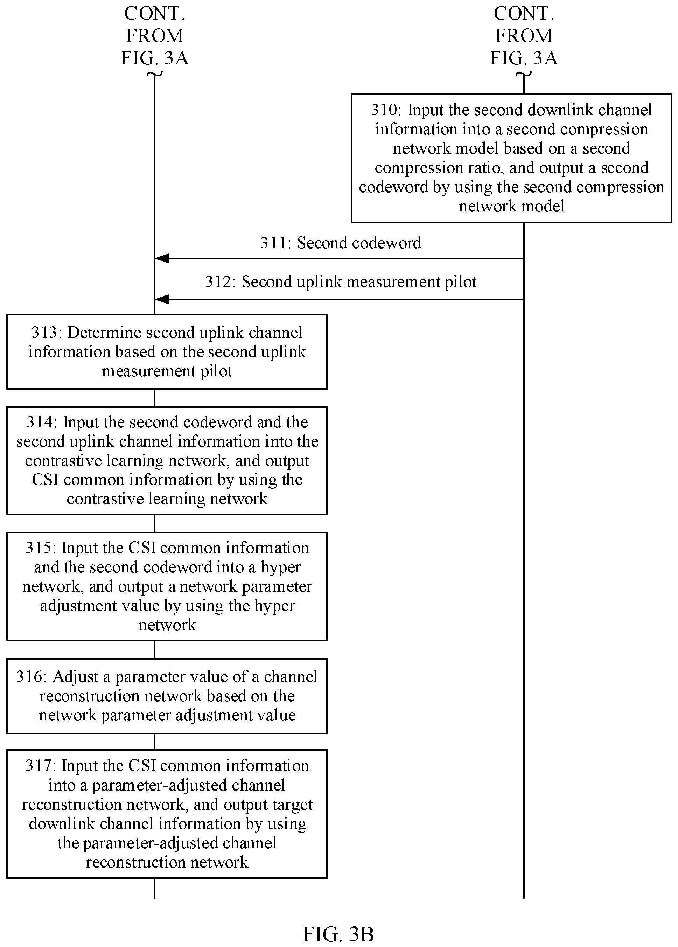

The following describes, by using a terminal and an access network device as an example of an execution body, a CSI feedback method in which a compression ratio identifier is included. Refer to FIG. 3A and FIG. 3B. Another embodiment of a CSI limited-feedback method in this application includes the following steps.

Step 301: An access network device separately sends a first downlink measurement pilot and a first compression ratio identifier to a terminal.

Optionally, the first downlink measurement pilot and the first compression ratio identifier are sent on different time domain resources, and a second downlink measurement pilot and a second compression ratio identifier are sent on different time domain resources.

Step 302: The terminal determines first downlink channel information based on the first downlink measurement pilot.

Step 303: The terminal inputs the first downlink channel information into a first compression network model based on the first compression ratio identifier, and outputs a first codeword by using the first compression network model.

Step 304: The terminal sends the first codeword to the access network device.

Step 305: The terminal sends a first uplink measurement pilot to the access network device.

Step 306: The access network device determines first uplink channel information based on the first uplink measurement pilot.

Step 307: The access network device determines a parameter value of a contrastive learning network based on the first codeword and the first uplink channel information.

Step 308: The access network device sends the second downlink measurement pilot and the second compression ratio identifier to the terminal.

Step 309: The terminal determines second downlink channel information based on the second downlink measurement pilot.

Step 310: The terminal inputs the second downlink channel information into a second compression network model based on the second compression ratio identifier, and outputs a second codeword by using the second compression network model.

Step 311: The access network device receives the second codeword sent by the terminal.

Step 312: The terminal sends a second uplink measurement pilot to the access network device.

Step 313: The access network device determines second uplink channel information based on the second uplink measurement pilot.

Step 314: The access network device inputs the second uplink channel information into the contrastive learning network, and outputs CSI common information by using the contrastive learning network.

Step 315: The access network device inputs the CSI common information and the second codeword into a hyper network, and outputs a network parameter adjustment value by using the hyper network.

Step 316: The access network device adjusts a parameter value of a channel reconstruction network based on the network parameter adjustment value.

Step 317: The access network device inputs the CSI common information into a parameter-adjusted channel reconstruction network, and outputs target downlink channel information by using the parameter-adjusted channel reconstruction network.

In this application, a compression ratio includes but is not limited to 1/4, 1/8, 1/32, and 1/64. A correspondence between a compression ratio size and a compression ratio level may be set based on an actual situation. This is not limited in this application.

The terminal may receive the first downlink measurement pilot and send the first uplink measurement pilot in a first measurement pilot periodicity, and receive the second downlink measurement pilot and send the second uplink measurement pilot in a second measurement pilot periodicity. Because the terminal sends a low-compression-ratio codeword in the second measurement pilot periodicity, and the second measurement pilot periodicity is greater than the first measurement pilot periodicity, a high-compression-ratio codeword may be sent for a short time, and the low-compression-ratio codeword may be sent for a long time, to reduce CSI feedback overheads. In an optional embodiment, the second measurement pilot periodicity may be less than preset duration, and the first measurement pilot periodicity is greater than or equal to the preset duration. The second measurement pilot periodicity, the first measurement pilot periodicity, and the preset duration may be set based on an actual situation. This is not limited in this application.

This embodiment has all technical effects of the embodiment shown in FIG. 2A and FIG. 2B, and this embodiment may explicitly indicate the terminal to feed back codewords with different levels of compression ratios. For an optional embodiment of the embodiment shown in FIG. 3A and FIG. 3B, refer to the optional embodiment of the embodiment shown in FIG. 2A and FIG. 2B. Details are not described herein again. It should be noted that, in this application, any compression ratio may alternatively be set as a default compression ratio, a codeword with the default compression ratio is fed back if no compression ratio identifier is received, and a codeword corresponding to a compression ratio identifier is fed back if the compression ratio identifier is received.

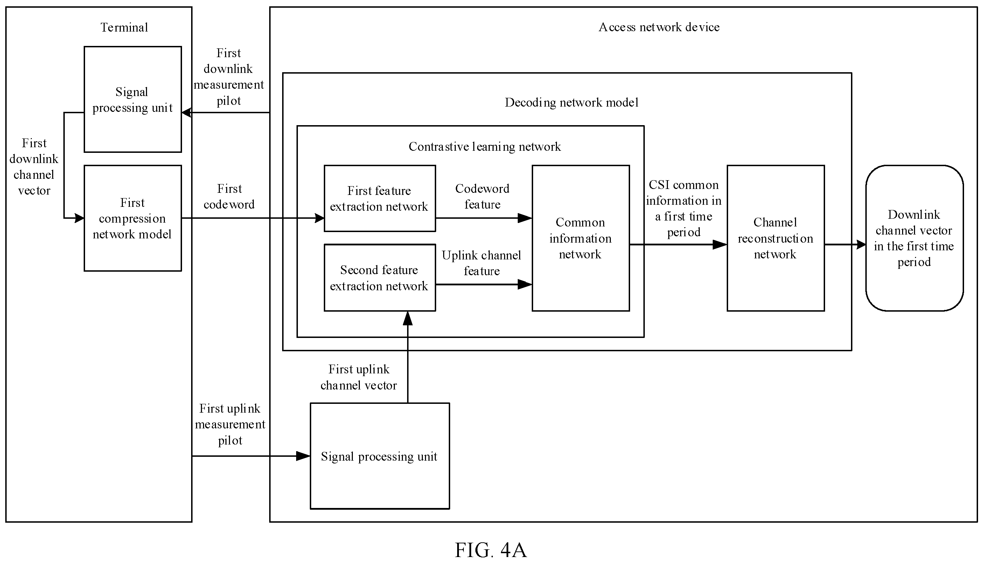

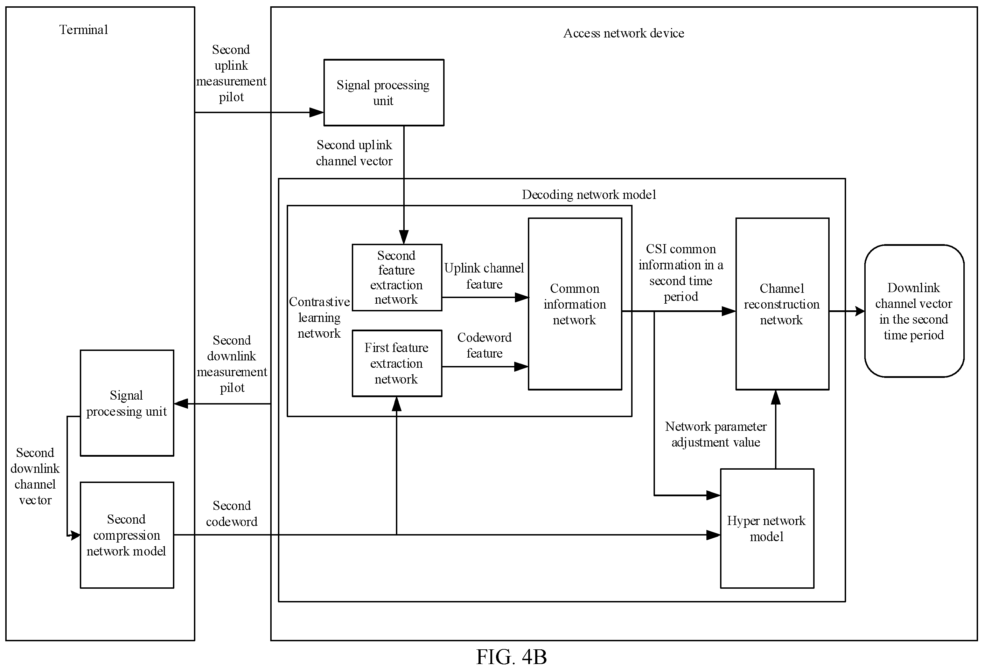

The following describes a CSI limited-feedback method in this application with reference to FIG. 4A and FIG. 4B. Refer to FIG. 4A. An access network device includes a decoding network model, and the decoding network model includes a contrastive learning network, a channel reconstruction network, and a hyper network (not shown in FIG. 4A). The contrastive learning network includes a first feature extraction network, a second feature common information network, and a common information network.

In a first time period, after obtaining a first downlink measurement pilot, a signal processing unit of a terminal determines a first downlink channel vector based on the first downlink measurement pilot, compresses the first downlink channel vector into a first codeword by using a first compression network model, sends the first codeword to the first feature extraction network, and outputs a codeword feature by using the first feature extraction network. After receiving a first uplink measurement pilot sent by the terminal, a signal processing unit of the access network device determines a first uplink channel vector based on the first uplink measurement pilot, inputs the first uplink channel vector into the second feature extraction network, outputs an uplink channel feature by using the second feature extraction network, after inputting the uplink channel feature into the common information network, outputs CSI common information in the first time period by using the common information network based on the codeword feature and the uplink channel feature, and after inputting the first CSI common information into the channel reconstruction network, estimates a downlink channel vector in the first time period by using the channel reconstruction network.

Refer to FIG. 4B. In a second time period, after obtaining a second downlink measurement pilot, the signal processing unit of the terminal determines a second downlink channel vector based on the second downlink measurement pilot, compresses the second downlink channel vector into a second codeword by using a second compression network model, sends the second codeword to the first feature extraction network, and outputs a codeword feature by using the first feature extraction network. After receiving a second uplink measurement pilot sent by the terminal, the signal processing unit of the access network device determines a second uplink channel vector based on the second uplink measurement pilot, inputs the second uplink channel vector to the second feature extraction network, and outputs a second uplink channel feature by using the second feature extraction network. The common information network outputs CSI common information in the second time period based on the codeword feature and the uplink channel feature. After the CSI common information in the second time period and the codeword are input into the hyper network, the hyper network outputs a network parameter adjustment value, and the channel reconstruction network is adjusted based on the network parameter adjustment value. The channel reconstruction network estimates a downlink channel vector in the second time period based on the CSI common information in the second time period.

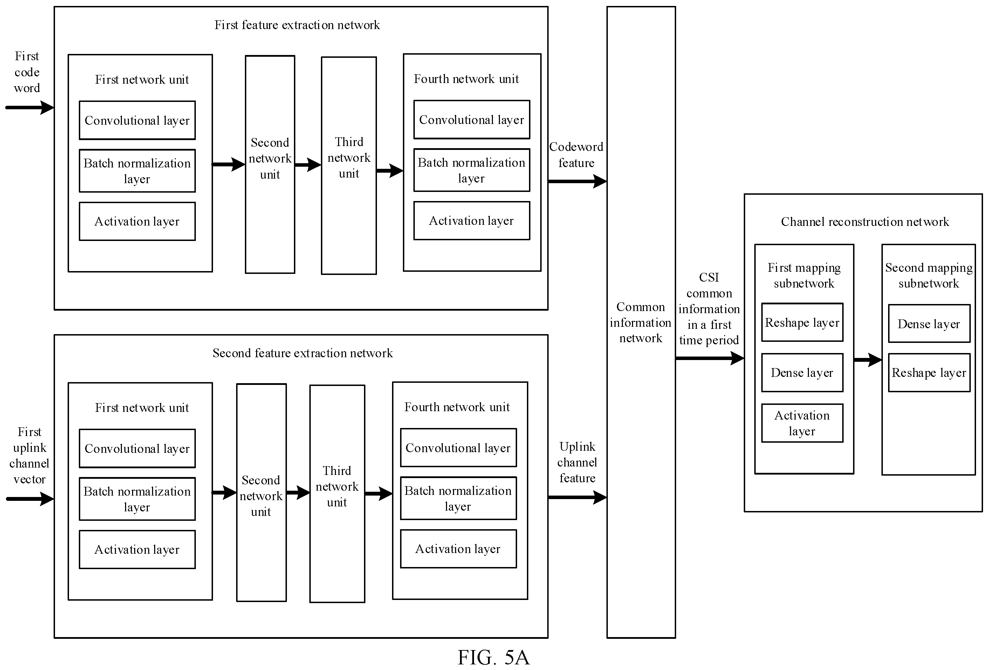

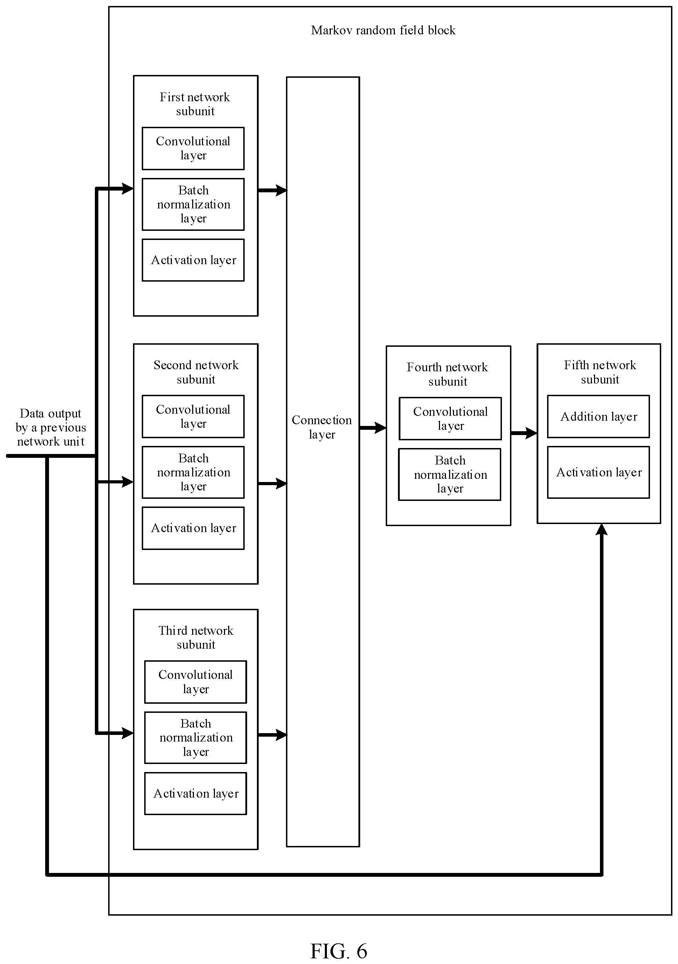

The following describes a data flow in FIG. 4A with reference to a network in FIG. 5A. Refer to FIG. 5A. In an example, a first feature extraction network includes four network units that are sequentially connected, and a first network unit includes a convolutional layer, a batch normalization (batch normalization, BN) layer, and an activation layer. A convolution kernel of the convolutional layer may be but is not limited to 3*3, and a function of the activation layer may be but is not limited to a LeakyReLU activation function. Both a second network unit and a third network unit are Markov random field blocks (Markov random field block, MRFB), and a fourth network unit is the same as the first network unit. Refer to FIG. 6. In an example, the Markov random field block includes a first network subunit, a second network subunit, a third network subunit, a connection layer, a fourth network subunit, and a fifth network subunit. The first network subunit, the second network subunit, and the third network subunit are separately connected to an input end of the connection layer, an output end of the connection layer is connected to the fourth network subunit, and the fourth network subunit is connected to the fifth network subunit.

In an example, the first network subunit, the second network subunit, and the third network subunit each include a convolutional layer, a batch normalization layer, and an activation layer. A convolution kernel of the convolutional layer of the first network subunit is 3*3, a convolution kernel of the convolutional layer of the second network subunit is 7*7, and a convolution kernel of the convolutional layer of the third network subunit is 9*9. The fourth network subunit includes a convolutional layer and a batch normalization layer, and a convolution kernel of the convolutional layer of the fourth network subunit is 1*1. The fifth network subunit includes an addition layer and an activation layer. An activation function of the activation layer in the first network subunit, the second network subunit, the third network subunit, and the fifth network subunit may be but is not limited to a LeakyReLU activation function.

A channel reconstruction network includes a first mapping subnetwork and a second mapping subnetwork. The first mapping subnetwork includes a reshape (reshape) layer, a dense (dense) layer, and an activation layer. The activation layer may be but is not limited to a Relu activation function. The second mapping subnetwork includes a dense layer and a reshape layer.

After a first codeword is sequentially processed by the first network unit, the second network unit, the third network unit, and the fourth network unit, a codeword feature is output by the fourth network unit. After a first uplink channel vector is processed by the first network unit, the second network unit, the third network unit, and the fourth network unit, an uplink channel feature is obtained and output by the fourth network unit. A common information network outputs CSI common information in a first time period based on the codeword feature and the uplink channel feature. After the CSI common information in the first time period is processed by the first mapping subnetwork and the second mapping subnetwork, a downlink channel vector in the first time period may be output by the second mapping subnetwork.

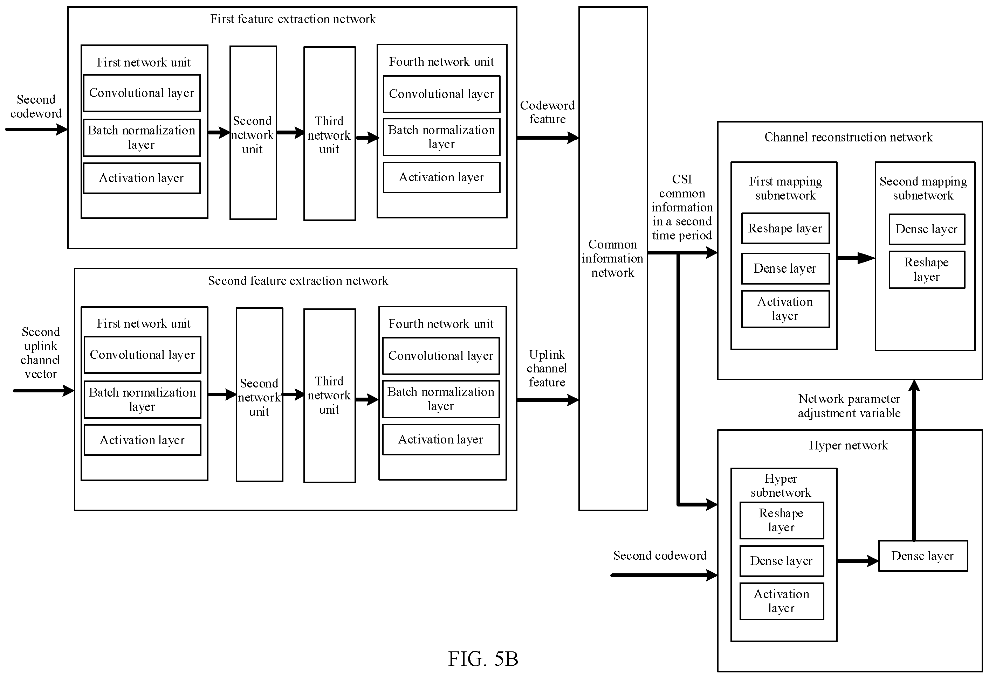

The following describes a data flow in FIG. 4B with reference to a network in FIG. 5B. Refer to FIG. 5B. In an example, a hyper network includes a hyper network subnetwork and a dense layer, and the hyper network subnetwork includes a reshape layer, a dense layer, and an activation layer. A second codeword undergoes a first network unit, a second network unit, a third network unit, and a fourth network unit in a first feature extraction subnetwork, and the fourth network unit of the first feature extraction subnetwork outputs a codeword feature. A second uplink channel vector undergoes a first network unit, a second network unit, a third network unit, and a fourth network unit in a second feature extraction subnetwork, and an uplink channel feature is output by the fourth network unit in the second feature extraction subnetwork. A common information network outputs CSI common information in a second time period based on the codeword feature and the uplink channel feature. The CSI common information in the second time period and the second codeword are processed by the hyper network subnetwork and the dense layer, to obtain a network parameter adjustment value. After a parameter value of a channel reconstruction network is adjusted based on the network parameter adjustment value, a parameter-adjusted channel reconstruction network outputs a downlink channel vector in the second time period based on the CSI common information in the second time period.

It should be noted that network unit or the subnetwork included in the contrastive learning network, the channel reconstruction network, and the hyper network are not limited to the foregoing examples, and the network layer included in the network unit or the subnetwork are not limited to the foregoing examples. A parameter value (for example, a size) of the network layer is not limited to the foregoing examples.

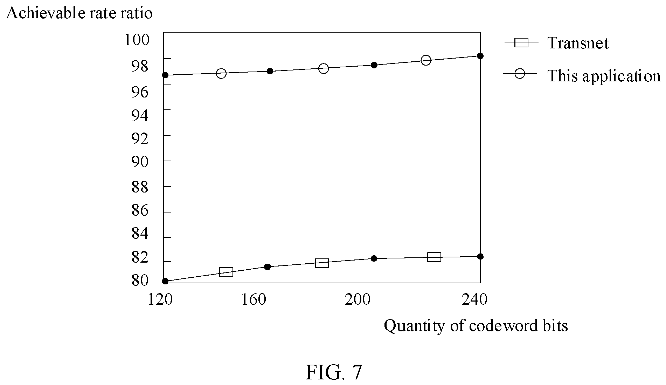

The following describes a result of CSI limited-feedback. Refer to FIG. 7. In an example, an antenna parameter and a carrier parameter of a base station are shown in Table 1, and a quantity of codeword bits and an achievable rate ratio are shown in FIG. 7.

Table 1

| Parameter | Parameter value |
|---|---|
| Scenario | Non-line-of-sight UMI |
| Carrier frequency band | Uplink frequency band of 2.5 GHz and downlink frequency band of 2.62 GHz/2.86 GHz/3.22 GHz |
| Subcarrier spacing | 30 kHz |
| Total quantity of subcarriers | 512 |
| Quantity of truncated subcarriers | 32 |
| Quantity of base station antennas | 16 |
| Base station antenna height | 10 meters |
| Dataset | 50000 training samples and 10000 test samples |

The training sample and the test sample are obtained through truncation in sparse domain after two-dimensional discrete Fourier transform is performed on a downlink channel matrix based on a direction vector of each carrier.

It can be learned from FIG. 7 that in this application, when the quantity of codeword bits is 120 bits, the achievable rate ratio is 97%. When the quantity of codeword bits is 160 bits, the achievable rate ratio is 97.5%. When the quantity of codeword bits is 200 bits, the achievable rate ratio is 98%. When the quantity of codeword bits is 240 bits, the achievable rate ratio is 98.5%.

In transnet, when the quantity of codeword bits is 120 bits, the achievable rate ratio is 80%. When the quantity of codeword bits is 160 bits, the achievable rate ratio is 81%. When the quantity of codeword bits is in a range of 200 bits to 240 bits, the achievable rate ratio is 82%. It can be learned that in a case of same feedback overheads, the CSI feedback method in this application can significantly improve an achievable rate, and improve signal decoding performance.

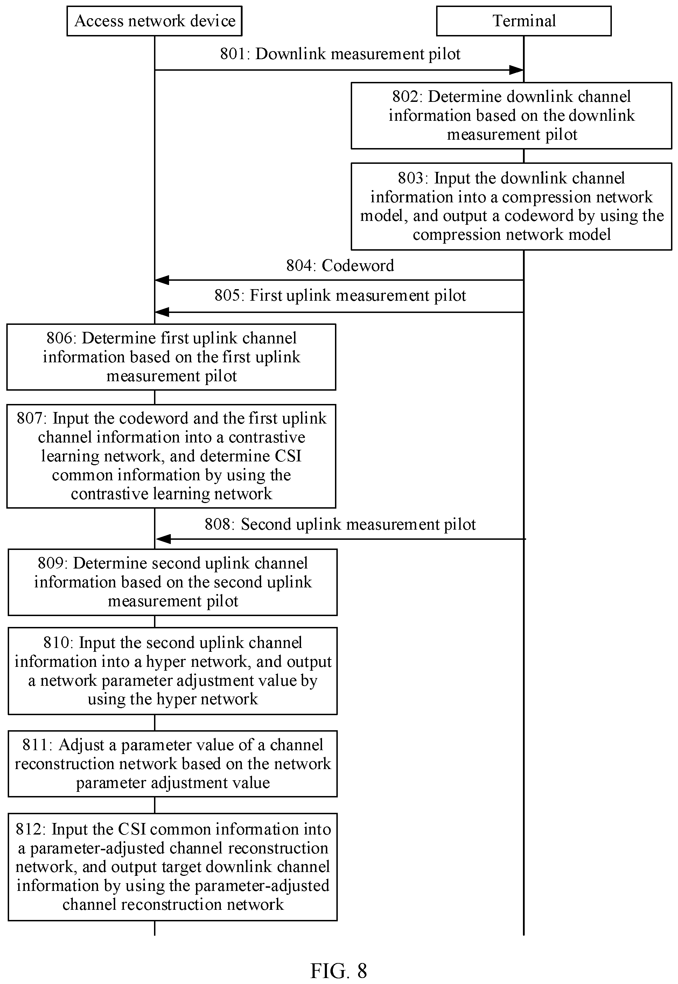

The following describes a CSI zero-feedback method in this application. Refer to FIG. 8. An embodiment of a CSI zero-feedback method in this application includes the following steps.

Step 801: An access network device sends a downlink measurement pilot to a terminal.

Step 802: The terminal determines downlink channel information based on the downlink measurement pilot.

Step 803: The terminal inputs the downlink channel information into a compression network model, and outputs a codeword by using the compression network model, where the compression network model is used to generate a high-compression-ratio codeword from the downlink channel information.

Step 804: The terminal sends the codeword to the access network device.

Step 805: The terminal sends a first uplink measurement pilot to the access network device.

Step 806: The access network device determines first uplink channel information based on the first uplink measurement pilot.

Step 807: The access network device inputs the codeword and the first uplink channel information into a contrastive learning network, and determines CSI common information by using the contrastive learning network. For the contrastive learning network and the CSI common information, refer to the corresponding descriptions in the embodiment shown in FIG. 2A and FIG. 2B.

Step 808: The terminal sends a second uplink measurement pilot to the access network device.

Step 809: The access network device determines second uplink channel information based on the second uplink measurement pilot.

Step 810: The access network device inputs the second uplink channel information into a hyper network, and outputs a network parameter adjustment value by using the hyper network.

Step 811: The access network device adjusts a parameter value of a channel reconstruction network based on the network parameter adjustment value.

Step 812: The access network device inputs the CSI common information into a parameter-adjusted channel reconstruction network, and outputs target downlink channel information by using the parameter-adjusted channel reconstruction network.

The terminal may receive the downlink measurement pilot and send the first uplink measurement pilot in a first measurement pilot periodicity, and send the second uplink measurement pilot in a second measurement pilot periodicity. Because the terminal does not send a codeword in the second measurement pilot periodicity, and the second measurement pilot periodicity is greater than the first measurement pilot periodicity, a high-compression-ratio codeword may be sent for a short time, and no codeword is sent for a long time, to reduce CSI feedback overheads. In an optional embodiment, the second measurement pilot periodicity may be less than preset duration, and the first measurement pilot periodicity is greater than or equal to the preset duration. The second measurement pilot periodicity, the first measurement pilot periodicity, and the preset duration may be set based on an actual situation. This is not limited in this application.

In this embodiment, the access network device may determine CSI common information in a first time period based on a high-compression-ratio codeword and uplink channel information, adjust a channel reconstruction network based on an uplink channel vector, and output target downlink channel information by using the channel reconstruction network, where the target downlink channel information may be considered as downlink channel CSI. The downlink channel CSI can be estimated without feeding back a codeword in a second time period, and therefore, CSI feedback overheads can be reduced.

Then, the hyper network can determine the network parameter adjustment value in a current scenario based on the uplink channel information, and can adjust the channel reconstruction network in a decoding network model based on the network parameter adjustment value in the current scenario, so that the decoding network model can reconstruct downlink channel information in different scenarios.

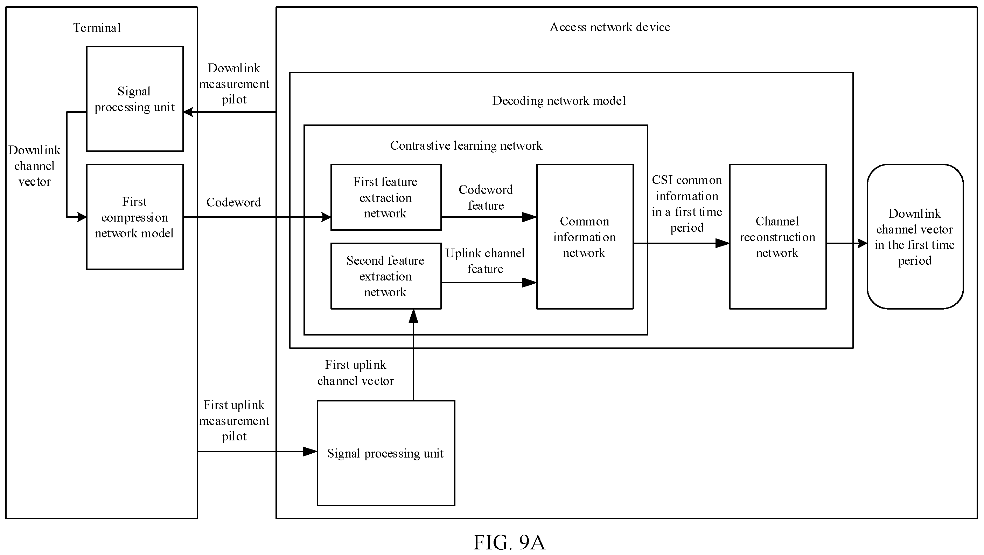

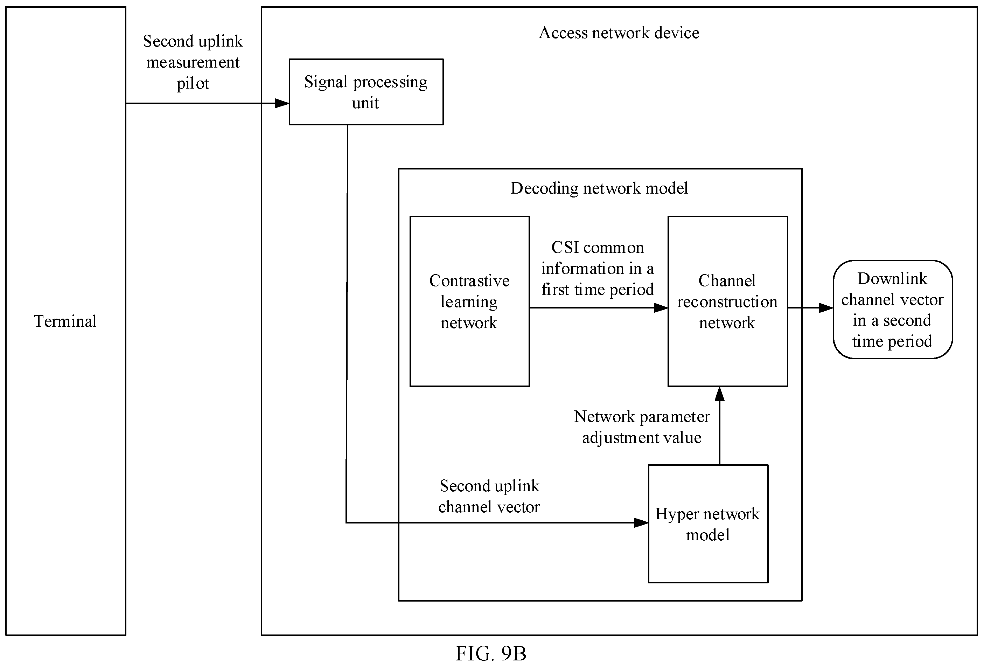

The following describes a CSI zero-feedback method in this application with reference to FIG. 9A and FIG. 9B. Refer to FIG. 9A. In a first time period, after obtaining a downlink measurement pilot, a signal processing unit of a terminal determines a downlink channel vector based on the downlink measurement pilot, compresses the downlink channel vector into a codeword by using a compression network model, and sends the codeword to a feature extraction network of an access network device. After receiving a first uplink measurement pilot sent by the terminal, a signal processing unit of the access network device determines a first uplink channel vector based on the first uplink measurement pilot, inputs the codeword into a first feature extraction network, inputs the first uplink channel vector into a second feature extraction network, outputs a codeword feature by using the first feature extraction network, and outputs an uplink channel feature by using the second feature extraction network. A common information network determines and stores CSI common information in the first time period based on the codeword feature and the uplink channel feature.

Refer to FIG. 9B. In a second time period, after receiving a second uplink measurement pilot sent by the terminal, the signal processing unit of the access network device determines a second uplink channel vector based on the second uplink measurement pilot, inputs the second uplink channel vector to a hyper network, outputs a network parameter adjustment value by using the hyper network, and adjusts a channel reconstruction network based on the network parameter adjustment value. An adjusted channel reconstruction network outputs a downlink channel vector in the second time period based on the CSI common information in the first time period.

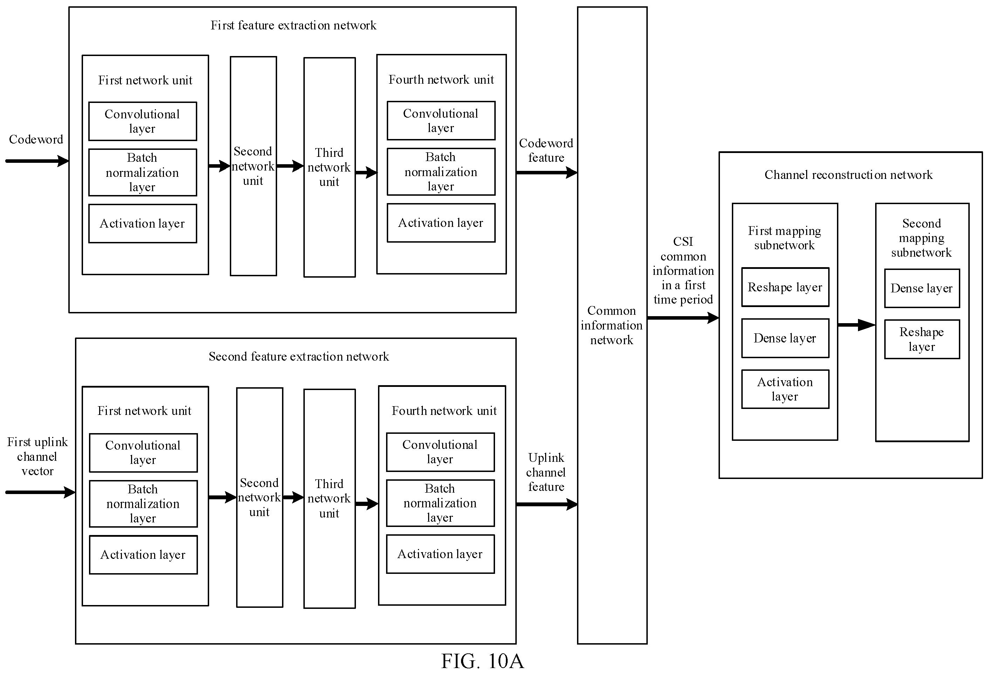

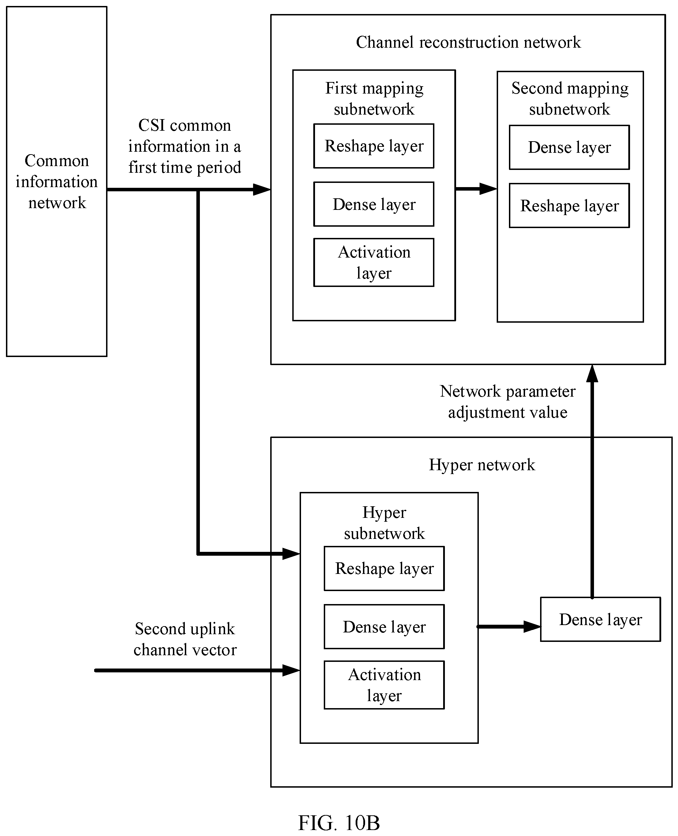

For the first feature extraction network, the second feature extraction network, and the channel reconstruction network in FIG. 10A, refer to FIG. 5A. For the first feature extraction network, the second feature extraction network, the channel reconstruction network, and the hyper network in FIG. 10B, refer to FIG. 5B.

The following describes, with reference to a neural network model in FIG. 10A, data undergoing the neural network model in FIG. 9A. Refer to FIG. 10A. In an example, a codeword is separately processed by a first network unit, a second network unit, a third network unit, and a fourth network unit in the first feature extraction network, and a codeword feature is output by the fourth network unit. A first uplink channel vector is processed by a first network unit, a second network unit, a third network unit, and a fourth network unit in the second feature extraction network, and an uplink channel feature is output by the fourth network unit. A common information network outputs CSI common information in a first time period based on the codeword feature and the uplink channel feature.

The following describes, with reference to a neural network model in FIG. 10B, data undergoing the neural network model in FIG. 9B. Refer to FIG. 10B. In an example, a second uplink channel vector may be processed by a hyper subnetwork and a dense layer, to obtain a network parameter adjustment value. After a channel reconstruction network is adjusted based on the network parameter adjustment value, an adjusted channel reconstruction network outputs a downlink channel vector in a second time period based on the CSI common information in the first time period.

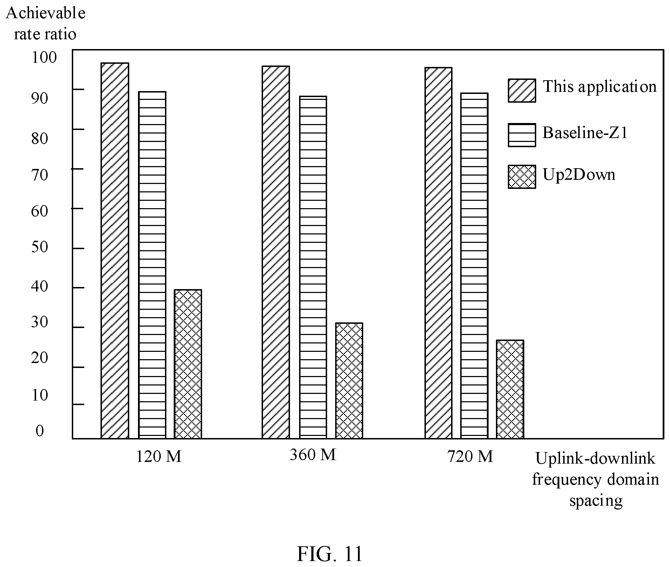

In this application, an uplink-downlink frequency domain spacing is a spacing between an FDD uplink frequency band and an FDD downlink frequency band. The following describes a result of CSI zero-feedback. Refer to FIG. 11. In an example, when an uplink-downlink frequency domain spacing is 120 M, an achievable rate ratio in this application is 98%, an achievable rate ratio of baseline-Z1 is 90%, and an achievable rate ratio of Up2Down is 38%. When the uplink-downlink frequency domain spacing is 360 M, the achievable rate ratio in this application is 98%, the achievable rate ratio of baseline-Z1 is 89%, and the achievable rate ratio of Up2Down is 29%. When the uplink-downlink frequency domain spacing is 720 M, the achievable rate ratio in this application is 98%, the achievable rate ratio of baseline-Z1 is 89%, and the achievable rate ratio of Up2Down is 25%. It can be learned from this that, in a case of a same uplink-downlink frequency domain spacing, the achievable rate ratio in this application is higher than that in the other two comparison solutions, to improve signal decoding performance.

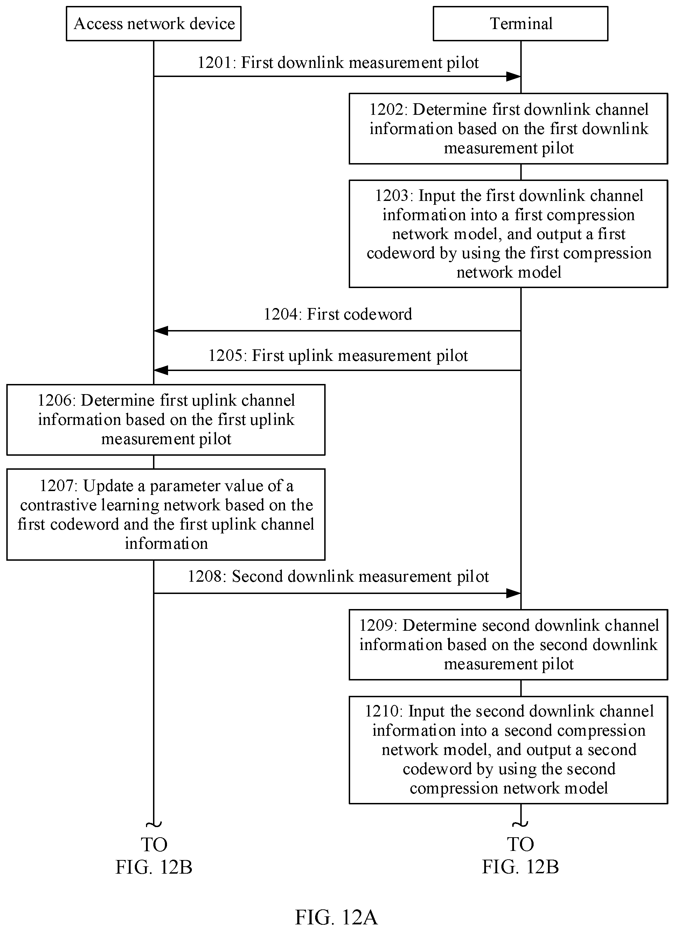

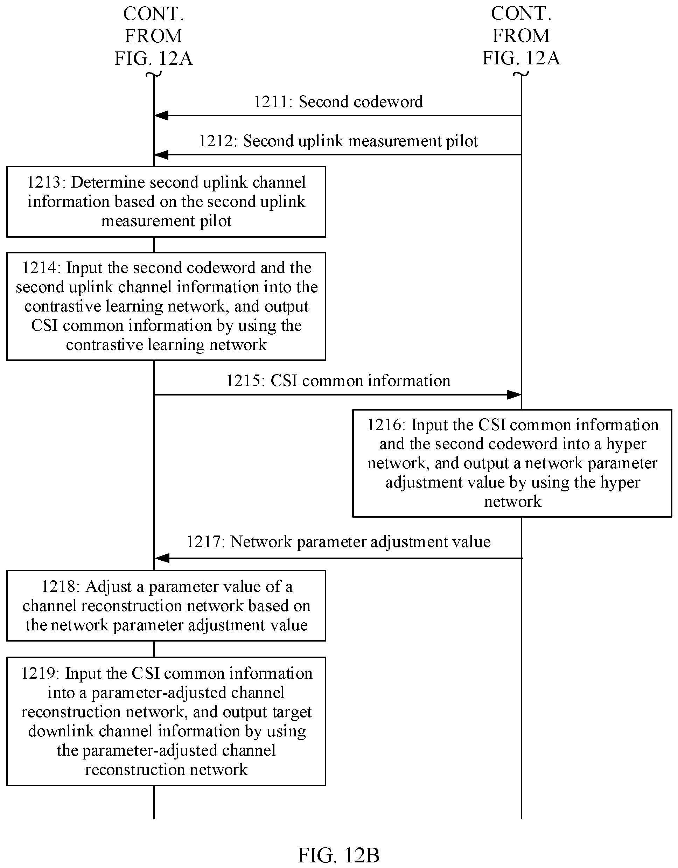

In the foregoing embodiments, the hyper network is deployed on the access network device. The following describes a CSI feedback method in which a compression ratio identifier is not included when a hyper network is deployed on a terminal side. Refer to FIG. 12A and FIG. 12B. Another embodiment of a CSI limited-feedback method in this application includes the following steps.

Step 1201: An access network device sends a first downlink measurement pilot to a terminal.

Step 1202: The terminal determines first downlink channel information based on the first downlink measurement pilot.

Step 1203: The terminal inputs the first downlink channel information into a first compression network model, and outputs a first codeword by using the first compression network model.

Step 1204: The terminal sends the first codeword to the access network device.

Step 1205: The terminal sends a first uplink measurement pilot to the access network device.

Step 1206: The access network device determines first uplink channel information based on the first uplink measurement pilot.

Step 1207: The access network device updates a parameter value of a contrastive learning network based on the first codeword and the first uplink channel information.

Step 1208: The access network device sends a second downlink measurement pilot to the terminal.

Step 1209: The terminal determines second downlink channel information based on the second downlink measurement pilot.

Step 1210: The terminal inputs the second downlink channel information into a second compression network model, and outputs a second codeword by using the second compression network model.

A condition for triggering execution of step 1203 or step 1210 may be a preset periodicity. For example, step 1201 to step 1203 are performed in a first measurement pilot periodicity, and step 1208 to step 1210 are performed in a second measurement pilot periodicity. A compression ratio of the second codeword is less than a compression ratio of the first codeword. The first compression network model is used to output a high-compression-ratio codeword, and the second compression network model is used to output a low-compression-ratio codeword.

Step 1211: The access network device receives the second codeword sent by the terminal.

Step 1212: The terminal sends a second uplink measurement pilot to the access network device.

Step 1213: The access network device determines second uplink channel information based on the second uplink measurement pilot.

Step 1214: The access network device inputs the second codeword and the second uplink channel information into the contrastive learning network, and outputs CSI common information by using the contrastive learning network.

Step 1215: The access network device sends the CSI common information to the terminal.

Step 1216: The terminal inputs the CSI common information and the second codeword into a hyper network, and outputs a network parameter adjustment value by using the hyper network.

It should be noted that before step 1208, the access network device may send a network parameter value of the hyper network to the terminal, and the terminal may configure or update the hyper network based on the network parameter value of the hyper network. A network parameter of the hyper network includes one or more of network structure data, a neuron weight, a bias, and an activation function.

Step 1217: The terminal sends the network parameter adjustment value to the access network device.

Step 1218: The access network device adjusts a parameter value of a channel reconstruction network based on the network parameter adjustment value.

Step 1219: The access network device inputs the CSI common information into a parameter-adjusted channel reconstruction network, and outputs target downlink channel information by using the parameter-adjusted channel reconstruction network.

In this embodiment, when the hyper network is deployed on the terminal, the terminal may feed back the low-compression-ratio codeword and the network parameter adjustment value, and the access network device may estimate downlink channel CSI in a second time period based on the low-compression-ratio codeword and the network parameter adjustment value. Therefore, CSI feedback overheads can be reduced.

Then, the hyper network can extract the network parameter adjustment value in a current scenario based on the CSI common information and the low-compression-ratio codeword, and can adjust the channel reconstruction network in a decoding network model based on the network parameter adjustment value in the current scenario, so that the decoding network model can reconstruct downlink channel information in different scenarios.

In addition, the hyper network is deployed on the terminal, so that calculation overheads of a base station can be reduced.

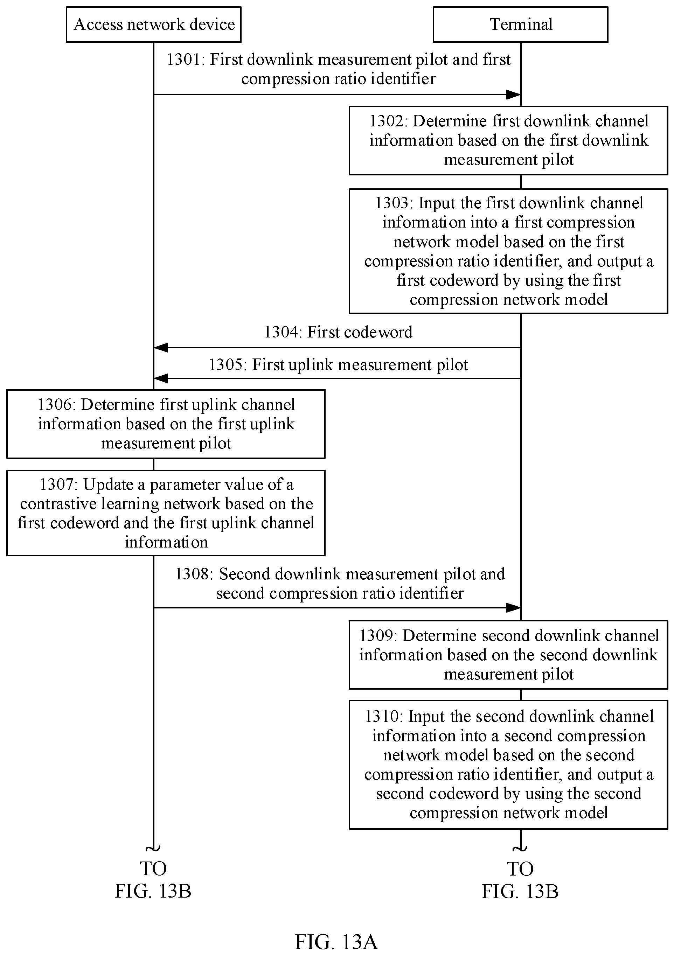

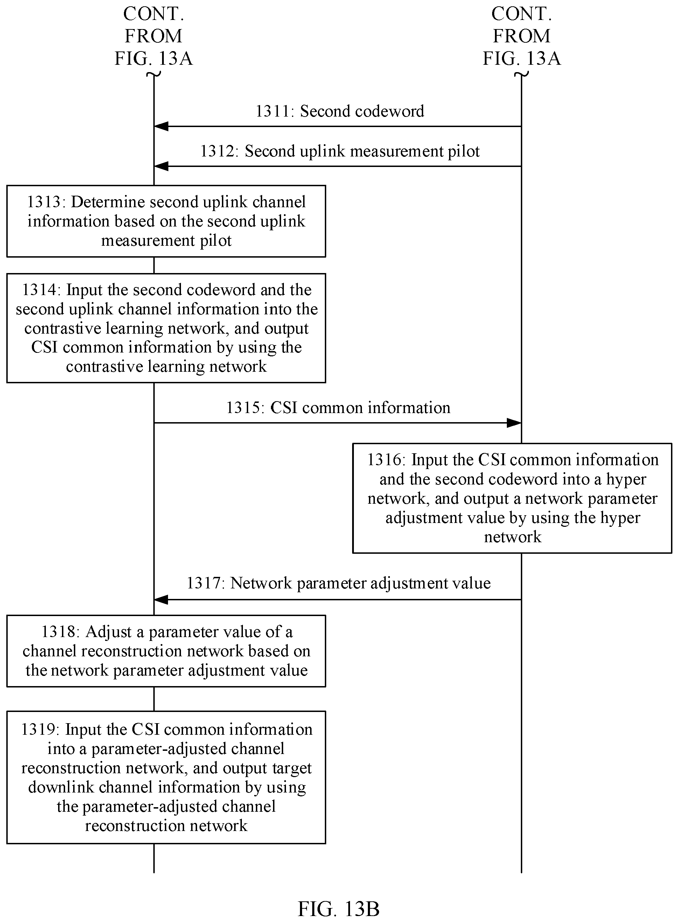

The following describes, with reference to deployment of a hyper network on a terminal, a CSI feedback method in which a compression ratio identifier is included. Refer to FIG. 13A and FIG. 13B. Another embodiment of a CSI limited-feedback method in this application includes the following steps.

Step 1301: An access network device separately sends a first downlink measurement pilot and a first compression ratio identifier to a terminal.

Step 1302: The terminal determines first downlink channel information based on the first downlink measurement pilot.

Step 1303: The terminal inputs the first downlink channel information into a first compression network model based on the first compression ratio identifier, and outputs a first codeword by using the first compression network model.

Step 1304: The terminal sends the first codeword to the access network device.

Step 1305: The terminal sends a first uplink measurement pilot to the access network device.

Step 1306: The access network device determines first uplink channel information based on the first uplink measurement pilot.

Step 1307: The access network device updates a parameter value of a contrastive learning network based on the first codeword and the first uplink channel information.

Step 1308: The access network device sends a second downlink measurement pilot and a second compression ratio identifier to the terminal.

Step 1309: The terminal determines second downlink channel information based on the second downlink measurement pilot.

Step 1310: The terminal inputs the second downlink channel information into a second compression network model based on the second compression ratio identifier, and outputs a second codeword by using the second compression network model.

Step 1311: The access network device receives the second codeword sent by the terminal.

Step 1312: The terminal sends a second uplink measurement pilot to the access network device.

Step 1313: The access network device determines second uplink channel information based on the second uplink measurement pilot.

Step 1314: The access network device inputs the second codeword and the second uplink channel information into the contrastive learning network, and outputs CSI common information by using the contrastive learning network.

Step 1315: The access network device sends the CSI common information to the terminal.

Step 1316: The terminal inputs the CSI common information and the second codeword into a hyper network, and outputs a network parameter adjustment value by using the hyper network.

Step 1317: The terminal sends the network parameter adjustment value to the access network device.

Step 1318: The access network device adjusts a parameter value of a channel reconstruction network based on the network parameter adjustment value.

Step 1319: The access network device inputs the CSI common information into a parameter-adjusted channel reconstruction network, and outputs target downlink channel information by using the parameter-adjusted channel reconstruction network.

In this embodiment, when the hyper network is deployed on the terminal, the terminal may feed back a low-compression-ratio codeword and the network parameter adjustment value, and the access network device may estimate downlink channel CSI in a second time period based on the low-compression-ratio codeword and the network parameter adjustment value. Therefore, CSI feedback overheads can be reduced.

Then, the hyper network can extract the network parameter adjustment value in a current scenario based on the CSI common information and the low-compression-ratio codeword, and can adjust the channel reconstruction network in a decoding network model based on the network parameter adjustment value in the current scenario, so that the decoding network model can reconstruct downlink channel information in different scenarios.

In addition, the hyper network is deployed on the terminal, so that calculation overheads of a base station can be reduced.

In addition, this embodiment provides a method for explicitly indicating the terminal to feed back codewords with different levels of compression ratios.

It may be understood that, to implement functions in the foregoing embodiments, the access network device and the terminal include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

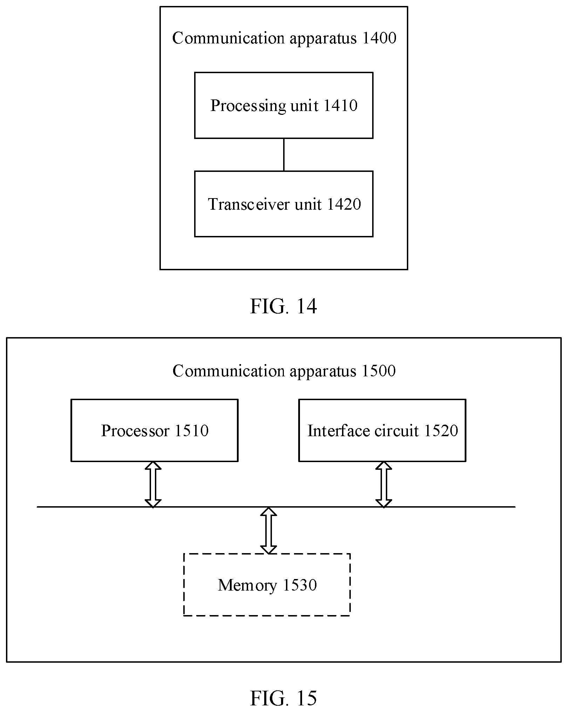

FIG. 14 and FIG. 15 are diagrams of possible structures of communication apparatuses according to embodiments of this application. These communication apparatuses may be configured to implement functions of the terminal or the access network device in the foregoing method embodiments, and therefore can also implement beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 14, a communication apparatus 1400 includes a processing unit 1410 and a transceiver unit 1420. The communication apparatus 1400 is configured to implement functions of the terminal or the base station in the method embodiment shown in FIG. 2A and FIG. 2B, FIG. 3A and FIG. 3B, FIG. 8, FIG. 12A and FIG. 12B, or FIG. 13A and FIG. 13B.

When the communication apparatus 1400 is configured to implement functions of the terminal in the method embodiment shown in FIG. 2A and FIG. 2B, the processing unit 1410 is configured to perform step 202, step 203, step 209, and step 210, and the transceiver unit 1420 is configured to perform step 201, step 204, step 205, step 208, step 211, and step 212.

When the communication apparatus 1400 is configured to implement functions of the access network device in the method embodiment shown in FIG. 2A and FIG. 2B, the transceiver unit 1420 is configured to perform step 201, step 204, step 205, step 208, step 211, and step 212, and the processing unit 1410 is configured to perform step 206, step 207, and step 213 to step 217. For more detailed descriptions of the processing unit 1410 and the transceiver unit 1420, refer to related descriptions in the method embodiment shown in FIG. 2A and FIG. 2B.

When the communication apparatus 1400 is configured to implement functions of the terminal in the method embodiment shown in FIG. 3A and FIG. 3B, the processing unit 1410 is configured to perform step 302, step 303, step 309, and step 310, and the transceiver unit 1420 is configured to perform step 301, step 304, step 305, step 308, step 311, and step 312.

When the communication apparatus 1400 is configured to implement functions of the access network device in the method embodiment shown in FIG. 3A and FIG. 3B, the transceiver unit 1420 is configured to perform step 301, step 309, step 312, and step 319, and the processing unit 1410 is configured to perform step 306, step 307, step 308, and step 313 to step 317. For more detailed descriptions of the processing unit 1410 and the transceiver unit 1420, refer to related descriptions in the method embodiment shown in FIG. 3A and FIG. 3B.

When the communication apparatus 1400 is configured to implement functions of the terminal in the method embodiment shown in FIG. 8, the processing unit 1410 is configured to perform step 802 and step 803, and the transceiver unit 1420 is configured to perform step 801, step 804, step 805, and step 808.

When the communication apparatus 1400 is configured to implement functions of the access network device in the method embodiment shown in FIG. 8, the transceiver unit 1420 is configured to perform step 801, step 804, step 805, and step 808, and the processing unit 1410 is configured to perform step 806, step 807, and step 809 to step 812. For more detailed descriptions of the processing unit 1410 and the transceiver unit 1420, refer to related descriptions in the method embodiment shown in FIG. 8.

When the communication apparatus 1400 is configured to implement functions of the terminal in the method embodiment shown in FIG. 12A and FIG. 12B, the processing unit 1410 is configured to perform step 1202, step 1203, step 1209, step 1210, and step 1216, and the transceiver unit 1420 is configured to perform step 1201, step 1204, step 1205, step 1208, step 1211, step 1212, step 1215, and step 1217.

When the communication apparatus 1400 is configured to implement functions of the access network device in the method embodiment shown in FIG. 12A and FIG. 12B, the transceiver unit 1420 is configured to perform step 1201, step 1204, step 1205, step 1208, step 1211, step 1212, step 1215, and step 1217, and the processing unit 1410 is configured to perform step 1206, step 1207, step 1213, step 1214, step 1218, and step 1219. For more detailed descriptions of the processing unit 1410 and the transceiver unit 1420, refer to related descriptions in the method embodiment shown in FIG. 12A and FIG. 12B.

When the communication apparatus 1400 is configured to implement functions of the terminal in the method embodiment shown in FIG. 13A and FIG. 13B, the processing unit 1410 is configured to perform step 1302, step 1303, step 1309, step 1310, and step 1316, and the transceiver unit 1420 is configured to perform step 1301, step 1304, step 1305, step 1308, step 1311, step 1312, step 1315, and step 1317.

When the communication apparatus 1400 is configured to implement functions of the access network device in the method embodiment shown in FIG. 13A and FIG. 13B, the transceiver unit 1420 is configured to perform step 1301, step 1304, step 1305, step 1308, step 1311, step 1312, step 1315, and step 1317, and the processing unit 1410 is configured to perform step 1306, step 1307, step 1313, step 1314, step 1318, and step 1319. For more detailed descriptions of the processing unit 1410 and the transceiver unit 1420, refer to related descriptions in the method embodiment shown in FIG. 13A and FIG. 13B.

This application provides a wireless communication system. The wireless communication system includes a plurality of communication apparatuses 1400. One or more communication apparatuses are configured to implement functions of a terminal, and one or more other communication apparatuses are configured to implement functions of an access network device. A compression network model is deployed on a communication apparatus configured to implement functions of a terminal, a decoding network model is deployed on a communication apparatus configured to implement functions of an access network device, and the compression network model and the decoding network model may form an end-to-end network.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, input data needed by the processor 1510 to run instructions, or data generated after the processor 1510 runs instructions.

When the communication apparatus 1500 is configured to implement the method shown in FIG. 2A and FIG. 2B, FIG. 3A and FIG. 3B, FIG. 8, FIG. 12A and FIG. 12B, or FIG. 13A and FIG. 13B, the processor 1510 is configured to implement a function of the processing unit 1410, and the interface circuit 1520 is configured to implement a function of the transceiver unit 1420.

When the communication apparatus is a chip used in a terminal, the chip in the terminal implements functions of the terminal in the method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements functions of the access network device in the method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any conventional processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or instructions are loaded and executed on a computer, all or some of the procedures or functions described in embodiments of this application are performed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A channel state information CSI feedback method, comprising:

   sending a first downlink measurement pilot to a terminal;
   receiving a first codeword sent by the terminal based on the first downlink measurement pilot;
   receiving a first uplink measurement pilot sent by the terminal;
   determining first uplink channel information based on the first uplink measurement pilot;
   updating a parameter value of a contrastive learning network based on the first codeword and the first uplink channel information;
   sending a second downlink measurement pilot to the terminal;
   receiving a second codeword sent by the terminal based on the second downlink measurement pilot, wherein a compression ratio corresponding to the second codeword is less than a compression ratio corresponding to the first codeword;
   receiving a second uplink measurement pilot sent by the terminal;
   determining second uplink channel information based on the second uplink measurement pilot;
   inputting the second codeword and the second uplink channel information into the contrastive learning network, and outputting CSI common information by using the contrastive learning network;
   inputting the CSI common information and the second codeword into a hyper network, and outputting a network parameter adjustment value by using the hyper network;
   adjusting a parameter value of the channel reconstruction network based on the network parameter adjustment value; and
   inputting the CSI common information into a parameter-adjusted channel reconstruction network, and outputting target downlink channel information by using the parameter-adjusted channel reconstruction network.

2. The method according to claim 1, wherein the sending the first downlink measurement pilot to the terminal comprises: sending the first downlink measurement pilot to the terminal in a first measurement pilot periodicity; and
   the sending the second downlink measurement pilot to the terminal comprises: sending the second downlink measurement pilot to the terminal in a second measurement pilot periodicity, wherein the second measurement pilot periodicity is greater than the first measurement pilot periodicity.

3. The method according to claim 1, wherein the first downlink measurement pilot and the second downlink measurement pilot meet at least one of the following conditions: a measurement pilot bandwidth of the first downlink measurement pilot is greater than a measurement pilot bandwidth of the second downlink measurement pilot, a measurement pilot density of the first downlink measurement pilot is greater than a measurement pilot density of the second downlink measurement pilot, and a quantity of measurement pilot ports of the first downlink measurement pilot is greater than a quantity of measurement pilot ports of the second downlink measurement pilot.

4. The method according to claim 1, wherein the method further comprises:

   after the sending the first downlink measurement pilot to the terminal, sending a first compression ratio identifier to the terminal, wherein the first compression ratio identifier corresponds to the compression ratio of the first codeword; and
   after the sending the second downlink measurement pilot to the terminal, sending a second compression ratio identifier to the terminal, wherein the second compression ratio identifier corresponds to the compression ratio of the second codeword.

5. The method according to claim 1, wherein the contrastive learning network comprises a first feature extraction network, a second feature extraction network, and a common information network, the first feature extraction network is used to extract a codeword feature, the second feature extraction network is used to extract an uplink channel feature, the common information network is used to determine the CSI common information based on the codeword feature and the uplink channel feature, and the first feature extraction network is the same as the second feature extraction network.

6. The method according to claim 1, wherein the network parameter adjustment value comprises at least one of network structure data, a neuron weight, a bias, an activation function, and the like.

7. The method according to any one of claims 1 to 6, wherein the method further comprises:

precoding data based on the target downlink channel information;
sending precoded data to the terminal;
measuring a communication quality indicator based on the data, wherein the communication quality indicator comprises at least one of a signal-to-noise ratio and a block error rate; and
when the communication quality indicator is greater than a preset threshold, triggering the step of sending the first downlink measurement pilot to the terminal.

8. A channel state information CSI feedback method, comprising:

receiving a first downlink measurement pilot sent by an access network device;
determining first downlink channel information based on the first downlink measurement pilot;
inputting the first downlink channel information into a first compression network model, and outputting a first codeword by using the first compression network model;
sending the first codeword to the access network device;
sending a first uplink measurement pilot to the access network device;
receiving a second downlink measurement pilot sent by the access network device;
determining second downlink channel information based on the second downlink measurement pilot;
inputting the second downlink channel information into a second compression network model, and outputting a second codeword by using the second compression network model, wherein a compression ratio of the second codeword is less than a compression ratio of the first codeword;
sending the second codeword to the access network device; and
sending a second uplink measurement pilot to the access network device.

9. The method according to claim 8, wherein

the receiving the first downlink measurement pilot sent by the access network device comprises: receiving the first downlink measurement pilot sent by the access network device in a first measurement pilot periodicity; and
the receiving the second downlink measurement pilot sent by the access network device comprises: receiving the second downlink measurement pilot sent by the access network device in a second measurement pilot periodicity, wherein the second measurement pilot periodicity is greater than the first measurement pilot periodicity.

10. The method according to claim 8 or 9, wherein

the method further comprises: receiving a first compression ratio identifier sent by the access network device;
the inputting the first downlink channel information into the first compression network model comprises: inputting the first downlink channel information into the first compression network model based on the first compression ratio identifier;
the method further comprises: receiving a second compression ratio identifier sent by the access network device; and
the inputting the second downlink channel information into the second compression network model comprises: inputting the second downlink channel information into the second compression network model based on the second compression ratio identifier.

11. A channel state information CSI feedback method, comprising:

sending a first downlink measurement pilot to a terminal;
receiving a first codeword sent by the terminal based on the first downlink measurement pilot;
receiving a first uplink measurement pilot sent by the terminal;
determining first uplink channel information based on the first uplink measurement pilot;
updating a parameter value of a contrastive learning network based on the first codeword and the first uplink channel information;
sending a second downlink measurement pilot to the terminal;
receiving a second codeword sent by the terminal based on the second downlink measurement pilot, wherein a compression ratio corresponding to the second codeword is less than a compression ratio corresponding to the first codeword;

receiving a second uplink measurement pilot sent by the terminal;

determining second uplink channel information based on the second uplink measurement pilot;

inputting the second codeword and the second uplink channel information into the contrastive learning network, and outputting CSI common information by using the contrastive learning network;

sending the CSI common information to the terminal;

receiving a network parameter adjustment value sent by the terminal;

adjusting a parameter value of the channel reconstruction network based on the network parameter adjustment value; and

inputting the CSI common information into a parameter-adjusted channel reconstruction network, and outputting target downlink channel information by using the parameter-adjusted channel reconstruction network.

12. The method according to claim 11, wherein

the sending the first downlink measurement pilot to the terminal comprises: sending the first downlink measurement pilot to the terminal in a first measurement pilot periodicity; and

the sending the second downlink measurement pilot to the terminal comprises: sending the second downlink measurement pilot to the terminal in a second measurement pilot periodicity, wherein

the second measurement pilot periodicity is greater than the first measurement pilot periodicity.

13. The method according to claim 11, wherein the method further comprises:

after the sending the first downlink measurement pilot to the terminal, sending a first compression ratio identifier to the terminal, wherein the first compression ratio identifier corresponds to the compression ratio of the first codeword; and

after the sending the second downlink measurement pilot to the terminal, sending a second compression ratio identifier to the terminal, wherein the second compression ratio identifier corresponds to the compression ratio of the second codeword.

14. The method according to any one of claims 11 to 13, wherein the method further comprises:

precoding data based on the target downlink channel information;

sending precoded data to the terminal;

measuring a communication quality indicator based on the data, wherein the communication quality indicator comprises at least one of a signal-to-noise ratio and a block error rate; and

when the communication quality indicator is greater than a preset threshold, triggering the step of sending the first downlink measurement pilot to the terminal.

15. A channel state information CSI feedback method, comprising:

receiving a first downlink measurement pilot sent by an access network device;

determining first downlink channel information based on the first downlink measurement pilot;

inputting the first downlink channel information into a first compression network model, and outputting a first codeword by using the first compression network model;

sending the first codeword to the access network device;

sending a first uplink measurement pilot to the access network device;

receiving a second downlink measurement pilot sent by the access network device;

determining second downlink channel information based on the second downlink measurement pilot;

inputting the second downlink channel information into a second compression network model, and outputting a second codeword by using the second compression network model, wherein a compression ratio of the second codeword is less than a compression ratio of the first codeword;

sending the second codeword to the access network device; and

sending a second uplink measurement pilot to the access network device;

receiving CSI common information sent by the access network device, wherein the CSI common information is determined by the access network device based on the second codeword and the second uplink measurement pilot;

inputting the CSI common information into a hyper network, and outputting a network parameter adjustment value by using the hyper network; and
sending the network parameter adjustment value to the access network device.

**16.** The method according to claim 15, wherein

the receiving the first downlink measurement pilot sent by the access network device comprises: receiving the first downlink measurement pilot sent by the access network device in a first measurement pilot periodicity; and
the receiving the second downlink measurement pilot sent by the access network device comprises: receiving the second downlink measurement pilot sent by the access network device in a second measurement pilot periodicity, wherein
the second measurement pilot periodicity is greater than the first measurement pilot periodicity.

**17.** The method according to claim 15, wherein

the method further comprises: receiving a first compression ratio identifier sent by the access network device;
the inputting the first downlink channel information into the first compression network model comprises: inputting the first downlink channel information into the first compression network model based on the first compression ratio identifier;
the method further comprises: receiving a second compression ratio identifier sent by the access network device; and
the inputting the second downlink channel information into the second compression network model comprises: inputting the second downlink channel information into the second compression network model based on the second compression ratio identifier.

**18.** The method according to any one of claims 15 to 17, wherein before the receiving the first downlink measurement pilot sent by the access network device, the method further comprises:

receiving a network parameter value of the hyper network sent by the access network device; and
configuring the hyper network based on the network parameter value of the hyper network.

**19.** A channel state information CSI feedback method, comprising:

sending a downlink measurement pilot to a terminal;
receiving a codeword sent by the terminal;
receiving a first uplink measurement pilot sent by the terminal;
determining first uplink channel information based on the first uplink measurement pilot;
inputting the codeword and the first uplink channel information into a contrastive learning network, and determining CSI common information by using the contrastive learning network;
receiving a second uplink measurement pilot sent by the terminal;
determining second uplink channel information based on the second uplink measurement pilot;
inputting the second uplink channel information into a hyper network, and outputting a network parameter adjustment value by using the hyper network;
adjusting a parameter value of a channel reconstruction network based on the network parameter adjustment value, wherein the channel reconstruction network is separately connected to the contrastive learning network and the hyper network; and
inputting the CSI common information into a parameter-adjusted channel reconstruction network, and outputting target downlink channel information by using the parameter-adjusted channel reconstruction network.

**20.** The method according to claim 19, wherein

the receiving the first uplink measurement pilot sent by the terminal comprises: receiving the first uplink measurement pilot sent by the terminal in a first measurement pilot periodicity; and
the receiving the second uplink measurement pilot sent by the terminal comprises: receiving the second uplink measurement pilot sent by the terminal in a second measurement pilot periodicity, wherein
the first measurement pilot periodicity is less than the second measurement pilot periodicity.

**21.** The method according to claim 19 or 20, wherein the method further comprises:

precoding data based on the target downlink channel information;
sending precoded data to the terminal;
obtaining a communication quality indicator based on the data, wherein the communication quality indicator comprises at least one of a signal-to-noise ratio and a block error rate; and
when the communication quality indicator is greater than a preset threshold, triggering the step of sending the downlink measurement pilot to the terminal.

22. A channel state information CSI feedback method, comprising:

receiving a downlink measurement pilot sent by an access network device;
determining downlink channel information based on the downlink measurement pilot;
inputting the downlink channel information into a compression network model, and outputting a codeword by using the compression network model;
sending the codeword to the access network device;
sending a first uplink measurement pilot to the access network device; and
sending a second uplink measurement pilot to the access network device.

23. The method according to claim 22, wherein

the sending the first uplink measurement pilot to the access network device comprises: sending the first uplink measurement pilot to the access network device in a first measurement pilot periodicity; and
the sending the second uplink measurement pilot to the access network device comprises: sending the second uplink measurement pilot to the access network device in a second measurement pilot periodicity, wherein the first measurement pilot periodicity is less than the second measurement pilot periodicity.

24. A communication apparatus, comprising a module configured to perform the method according to any one of claims 1 to 7, 11 to 14, and 19 to 21.

25. A communication apparatus, comprising a module configured to perform the method according to any one of claims 8 to 10, 15 to 18, and 22 and 23.

26. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 7, 11 to 14, and 19 to 21 by using a logic circuit or by executing code instructions.

27. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 8 to 10, 15 to 18, and 22 and 23 by using a logic circuit or by executing code instructions.

28. A computer-readable storage medium, wherein the storage medium stores a computer program or instructions, and when the computer program or the instructions are executed by a communication apparatus, the method according to any one of claims 1 to 7, 11 to 14, and 19 to 21 is implemented.

29. A computer-readable storage medium, wherein the storage medium stores a computer program or instructions; and when the computer program or the instructions are executed by a communication apparatus, the method according to any one of claims 8 to 10, 15 to 18, and 22 and 23 is implemented.

FIG. 1

EP 4 753 325 A1

| Access network device | | Terminal |
|---|---|---|

201: First downlink measurement pilot

202: Determine first downlink channel information based on the first downlink measurement pilot

203: Input the first downlink channel information into a first compression network model, and output a first codeword by using the first compression network model

204: First codeword

205: First uplink measurement pilot

206: Determine first uplink channel information based on the first uplink measurement pilot

207: Update a parameter value of a contrastive learning network based on the first codeword and the first uplink channel information

208: Second downlink measurement pilot

209: Determine second downlink channel information based on the second downlink measurement pilot

TO
FIG. 2B

TO
FIG. 2B

FIG. 2A

CONT.
FROM
FIG. 2A

CONT.
FROM
FIG. 2A

210: Input the second downlink channel
information into a second compression
network model, and output a second
codeword by using the second compression
network model

211: Second codeword

212: Second uplink measurement pilot

213: Determine second uplink channel
information based on the second uplink
measurement pilot

214: Input the second codeword and the
second uplink channel information into the
contrastive learning network, and output
CSI common information by using the
contrastive learning network

215: Input the CSI common information
and the second codeword into a hyper
network, and output a network parameter
adjustment value by using the hyper
network

216: Adjust a parameter value of a channel
reconstruction network based on the
network parameter adjustment value

217: Input the CSI common information
into a parameter-adjusted channel
reconstruction network, and output target
downlink channel information by using
the parameter-adjusted channel
reconstruction network

FIG. 2B

| Access network device | | Terminal |
| --- | --- | --- |

301: First downlink measurement pilot and first compression ratio identifier

302: Determine first downlink channel information based on the first downlink measurement pilot

303: Input the first downlink channel information into a first compression network model based on the first compression ratio identifier, and output a first codeword by using the first compression network model

304: First codeword

305: First uplink measurement pilot

306: Determine first uplink channel information based on the first uplink measurement pilot

307: Update a parameter value of a contrastive learning network based on the first codeword and the first uplink channel information

308: Second downlink measurement pilot and second compression ratio identifier

309: Determine second downlink channel information based on the second downlink measurement pilot

TO
FIG. 3B

TO
FIG. 3B

FIG. 3A

CONT.
FROM
FIG. 3A

CONT.
FROM
FIG. 3A

310: Input the second downlink channel information into a second compression network model based on a second compression ratio, and output a second codeword by using the second compression network model

311: Second codeword

312: Second uplink measurement pilot

313: Determine second uplink channel information based on the second uplink measurement pilot

314: Input the second codeword and the second uplink channel information into the contrastive learning network, and output CSI common information by using the contrastive learning network

315: Input the CSI common information and the second codeword into a hyper network, and output a network parameter adjustment value by using the hyper network

316: Adjust a parameter value of a channel reconstruction network based on the network parameter adjustment value

317: Input the CSI common information into a parameter-adjusted channel reconstruction network, and output target downlink channel information by using the parameter-adjusted channel reconstruction network

FIG. 3B

Terminal

Signal
processing unit

First
downlink
channel
vector

First
compression
network model

First
downlink
measurement
pilot

First
codeword

First uplink
measurement
pilot

Access network device

Decoding network model

Contrastive learning network

First feature
extraction network

Codeword
feature

Second feature
extraction network

Uplink channel
feature

Common
information
network

CSI common
information in
a first time
period

Channel
reconstruction
network

Downlink
channel vector
in the first time
period

First uplink
channel vector

Signal processing unit

FIG. 4A

FIG. 4B

Channel reconstruction network

Second mapping subnetwork
- Dense layer
- Reshape layer

First mapping subnetwork
- Reshape layer
- Dense layer
- Activation layer

CSI common information in a first time period

Common information network

Codeword feature

Uplink channel feature

First feature extraction network

First network unit
- Convolutional layer
- Batch normalization layer
- Activation layer

Second network unit

Third network unit

Fourth network unit
- Convolutional layer
- Batch normalization layer
- Activation layer

First code word

Second feature extraction network

First network unit
- Convolutional layer
- Batch normalization layer
- Activation layer

Second network unit

Third network unit

Fourth network unit
- Convolutional layer
- Batch normalization layer
- Activation layer

First uplink channel vector

FIG. 5A

FIG. 5B

Markov random field block

First network subunit
- Convolutional layer
- Batch normalization layer
- Activation layer

Second network subunit
- Convolutional layer
- Batch normalization layer
- Activation layer

Third network subunit
- Convolutional layer
- Batch normalization layer
- Activation layer

Data output by a previous network unit

Connection layer

Fourth network subunit
- Convolutional layer
- Batch normalization layer

Fifth network subunit
- Addition layer
- Activation layer

FIG. 6

Achievable rate ratio

FIG. 7

| Access network device | | Terminal |
|---|---|---|

801: Downlink measurement pilot

802: Determine downlink channel information based on the downlink measurement pilot

803: Input the downlink channel information into a compression network model, and output a codeword by using the compression network model

804: Codeword

805: First uplink measurement pilot

806: Determine first uplink channel information based on the first uplink measurement pilot

807: Input the codeword and the first uplink channel information into a contrastive learning network, and determine CSI common information by using the contrastive learning network

808: Second uplink measurement pilot

809: Determine second uplink channel information based on the second uplink measurement pilot

810: Input the second uplink channel information into a hyper network, and output a network parameter adjustment value by using the hyper network

811: Adjust a parameter value of a channel reconstruction network based on the network parameter adjustment value

812: Input the CSI common information into a parameter-adjusted channel reconstruction network, and output target downlink channel information by using the parameter-adjusted channel reconstruction network

FIG. 8

FIG. 9A

Access network device

Terminal

Second uplink
measurement
pilot

Signal processing
unit

Decoding network model

Contrastive
learning
network

CSI common
information in a
first time period

Channel
reconstruction
network

Downlink
channel vector
in a second
time period

Network parameter
adjustment value

Second uplink
channel vector

Hyper network
model

FIG. 9B

FIG. 10A

EP 4 753 325 A1

FIG. 10B

FIG. 11

| Access network device | | Terminal |
|---|---|---|

1201: First downlink measurement pilot

1202: Determine first downlink channel information based on the first downlink measurement pilot

1203: Input the first downlink channel information into a first compression network model, and output a first codeword by using the first compression network model

1204: First codeword

1205: First uplink measurement pilot

1206: Determine first uplink channel information based on the first uplink measurement pilot

1207: Update a parameter value of a contrastive learning network based on the first codeword and the first uplink channel information

1208: Second downlink measurement pilot

1209: Determine second downlink channel information based on the second downlink measurement pilot

1210: Input the second downlink channel information into a second compression network model, and output a second codeword by using the second compression network model

TO
FIG. 12B

TO
FIG. 12B

FIG. 12A

CONT.
FROM
FIG. 12A

CONT.
FROM
FIG. 12A

1211: Second codeword

1212: Second uplink measurement pilot

1213: Determine second uplink channel information based on the second uplink measurement pilot

1214: Input the second codeword and the second uplink channel information into the contrastive learning network, and output CSI common information by using the contrastive learning network

1215: CSI common information

1216: Input the CSI common information and the second codeword into a hyper network, and output a network parameter adjustment value by using the hyper network

1217: Network parameter adjustment value

1218: Adjust a parameter value of a channel reconstruction network based on the network parameter adjustment value

1219: Input the CSI common information into a parameter-adjusted channel reconstruction network, and output target downlink channel information by using the parameter-adjusted channel reconstruction network

FIG. 12B

| Access network device | Terminal |
|---|---|

1301: First downlink measurement pilot and first compression ratio identifier

1302: Determine first downlink channel information based on the first downlink measurement pilot

1303: Input the first downlink channel information into a first compression network model based on the first compression ratio identifier, and output a first codeword by using the first compression network model

1304: First codeword

1305: First uplink measurement pilot

1306: Determine first uplink channel information based on the first uplink measurement pilot

1307: Update a parameter value of a contrastive learning network based on the first codeword and the first uplink channel information

1308: Second downlink measurement pilot and second compression ratio identifier

1309: Determine second downlink channel information based on the second downlink measurement pilot

1310: Input the second downlink channel information into a second compression network model based on the second compression ratio identifier, and output a second codeword by using the second compression network model

TO
FIG. 13B

TO
FIG. 13B

FIG. 13A

CONT.
FROM
FIG. 13A

CONT.
FROM
FIG. 13A

1311: Second codeword

1312: Second uplink measurement pilot

1313: Determine second uplink channel information based on the second uplink measurement pilot

1314: Input the second codeword and the second uplink channel information into the contrastive learning network, and output CSI common information by using the contrastive learning network

1315: CSI common information

1316: Input the CSI common information and the second codeword into a hyper network, and output a network parameter adjustment value by using the hyper network

1317: Network parameter adjustment value

1318: Adjust a parameter value of a channel reconstruction network based on the network parameter adjustment value

1319: Input the CSI common information into a parameter-adjusted channel reconstruction network, and output target downlink channel information by using the parameter-adjusted channel reconstruction network

FIG. 13B

Communication apparatus 1400

Processing unit 1410

Transceiver unit 1420

FIG. 14

Communication apparatus 1500

Processor 1510

Interface circuit 1520

Memory 1530

FIG. 15

## INTERNATIONAL SEARCH REPORT

| International application No. |
| --- |
| **PCT/CN2023/118475** |

| A. | CLASSIFICATION OF SUBJECT MATTER |
| --- | --- |

H04W28/06(2009.01)i;  H04B7/0417(2017.01)i

According to International Patent Classification (IPC) or to both national classification and IPC

| B. | FIELDS SEARCHED |
| --- | --- |

Minimum documentation searched (classification system followed by classification symbols)

IPC: H04W, H04B

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 信道状态信息, 反馈, 压缩, 码字, 编码, 译码, 导频, 探测参考信号, 上行, 下行, 开销, CSI, feedback, compress, code, pilot, RS, SRS, uplink, downlink, expense, overhead

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2021142605 A1 (HUAWEI TECHNOLOGIES CO., LTD.) 22 July 2021 (2021-07-22) description, paragraphs 169-252, and figure 5(a) | 22-23, 25, 27, 29 |
| Y | CN 113677007 A (DATANG MOBILE COMMUNICATIONS EQUIPMENT CO., LTD.) 19 November 2021 (2021-11-19) description, paragraphs 114-136 | 22-23, 25, 27, 29 |
| A | CN 114070374 A (ZTE CORP.) 18 February 2022 (2022-02-18) entire document | 1-29 |
| A | CN 116155333 A (UNIVERSITY OF ELECTRONIC SCIENCE AND TECHNOLOGY OF CHINA) 23 May 2023 (2023-05-23) entire document | 1-29 |
| A | US 2023132826 A1 (SAMSUNG ELECTRONICS CO., LTD.) 04 May 2023 (2023-05-04) entire document | 1-29 |
| A | US 2023246695 A1 (NTT DOCOMO INC.) 03 August 2023 (2023-08-03) entire document | 1-29 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 April 2024** | **13 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/118475**

| Patent document cited in search report | | | Publication date (day/month/year) | Patent family member(s) | | | Publication date (day/month/year) |
|---|---|---|---|---|---|---|---|
| WO | 2021142605 | A1 | 22 July 2021 | CN | 114846748 | A | 02 August 2022 |
| | | | | EP | 4075682 | A1 | 19 October 2022 |
| | | | | US | 2022353725 | A1 | 03 November 2022 |
| | | | | EP | 4075682 | A4 | 07 December 2022 |
| CN | 113677007 | A | 19 November 2021 | WO | 2021227648 | A1 | 18 November 2021 |
| | | | | EP | 4152857 | A1 | 22 March 2023 |
| | | | | EP | 4152857 | A4 | 01 November 2023 |
| | | | | US | 2023198711 | A1 | 22 June 2023 |
| CN | 114070374 | A | 18 February 2022 | | None | | |
| CN | 116155333 | A | 23 May 2023 | | None | | |
| US | 2023132826 | A1 | 04 May 2023 | WO | 2023080653 | A1 | 11 May 2023 |
| | | | | IN | 202141050461 | A | 05 May 2023 |
| US | 2023246695 | A1 | 03 August 2023 | WO | 2021253937 | A1 | 23 December 2021 |
| | | | | CN | 113824479 | A | 21 December 2021 |
| | | | | CN | 115917980 | A | 04 April 2023 |

Form PCT/ISA/210 (patent family annex) (July 2022)